# EUROPÄISCHE PATENTSCHRIFT

(11) **EP 0 735 112 B1**
(45) Veröffentlichungstag und Bekanntmachung des Hinweises auf die Patenterteilung: **01.08.2001**
(21) Anmeldenummer: 96104707.3
(22) Anmeldetag: 25.03.1996
(51) Int. Cl.: C09B 67/22, D06P 1/38, G01N 21/55

(54) **Farbstoffmischungen von faserreaktiven Azofarbstoffen und ihre Verwendung zum Färben von hydroxy- und/oder carbonamidgruppenhaltigem Fasermaterial**
Mixtures of reactive azo dyes and their use for dyeing fibrous material containing hydroxy and/or carbonamide groups
Mélanges de colorants azoiques réactifs et leur utilisation pour la teinture de fibres contenant des groupes hydroxy et/ou carbonamide

(30) Priorität: 30.03.1995 DE 19511688
(43) Veröffentlichungstag der Anmeldung: 02.10.1996
(73) Patentinhaber: DyStar Textilfarben GmbH & Co. Deutschland KG, 60318 Frankfurt am Main (DE)
(72) Erfinder: Von der Eltz, Andreas, Dr., 60431 Frankfurt am Main (DE); Russ, Werner Hubert, Dr., 65439 Flörsheim (DE); Gröbel, Bengt-Thomas, Dr., 65529 Niederems (DE)

(56) Entgegenhaltungen:
- EP-A- 0 437 184
- EP-A- 0 600 322
- EP-A- 0 644 240
- EP-A- 0 668 328
- EP-A- 0 679 697
- EP-A- 0 681 008
- US-A- 5 456 727

## Beschreibung

Die Erfindung liegt auf dem technischen Gebiet der faserreaktiven Farbstoffe.

Bei dem Bemühen, die Farbstoffgammen durch moderne Reaktivfarbstoffe zu erweitern oder zu ergänzen, stößt man in vielerlei Hinsicht an Grenzen, die durch eine einzelne Farbstoffkomponente nicht oder nur ungenügend gelöst werden können. Insbesondere dann, wenn bestimmte Farbnuancen gewünscht werden, sind hierzu einzelne Farbstoffe nicht geeignet. Vielmehr können bestimmte Farbnuancen nur dann erhalten werden, wenn man Mischungen von bestimmten verschiedenfarbigen Farbstoffen einsetzt. Um alle Farbnuancen erzeugen zu können, bedarf es theoretisch nach der subtraktiven Farbmischung nur dreier Farbstoffe, die die Idealfarbe Cyan, Gelb und Magenta besitzen. Der Farbraum, der von diesem Farbdreieck gebildet wird, enthält alle Farbtöne, die durch Mischung zugänglich sind.

Das Färben mit solchen Farbstoffmischungen ist in der Praxis schon lange als "Trichromiefärbung" bekannt. In der Regel werden drei Farbstoffe eingesetzt, von denen der jeweils einzelne blau-, gelb- bzw. rotfärbend ist. Oft werden jedoch auch noch zusätzlich ein oder zwei andere Farbstoffe in dieser Farbstoffmischung, oft nur in geringen Mengen, verwendet, um hierdurch bestimmte Wirkungen und Verschiebungen in der Nuance zu erreichen.
Eine Voraussetzung für den Einsatz der Farbstoffe in Mischung in der Trichromiefärbung ist, daß die Farbstoffe ein möglichst gleiches Färbeverhalten besitzen; dies betrifft insbesondere deren Substantivität, Migrationsverhalten und Fixiergrad. Das Färbeverhalten der Farbstoffe soll zudem während des gesamten Färbeprozesses möglichst gleich sein, um sowohl am Anfang des Färbeprozesses, wie beispielsweise bei einem kontinuierlichen Färbeverfahren, gleiche Nuancen wie am Ende des Verfahrens zu erhalten. So kann es bei idealer Trichromiefärbung nicht schädlich sein, daß der Färbeprozeß zu irgendeinem Zeitpunkt abgebrochen wird, wenn er mit demselben Färberezept zu späterer Zeit weitergeführt wird; denn der Farbton der erhaltenen Färbung sollte zu jeder Zeit des Färbeprozesses nahezu identisch sein, und lediglich die Farbtiefe sollte zunehmen.

Mit der vorliegenden Erfindung wurde nunmehr gefunden, daß Farbstoffe der nachstehend angegebenen und definierten allgemeinen Formeln (1a), (1b) und (2) bis (5) gemeinsam oder teilweise gemeinsam den Anforderungen an den Einsatz in der Trichromiefärbung entsprechen, wobei der Einsatz eines Farbstoffes entsprechend der allgemeinen Formel (3) zwingend ist.

Die Erfindung betrifft somit insbesondere Farbstoffmischungen, die durch den Gehalt eines oder zweier Kupferformazanfarbstoffe entsprechend der nachstehend genannten und definierten allgemeinen Formel (3) und eines oder mehrerer Azofarbstoffe, die aus der Gruppe von einem oder mehreren, wie zwei, drei und vier, Monoazofarbstoffen entsprechend der nachstehend genannten und definierten allgemeinen Formel (1a) oder (1b) oder (1a) und (1b), einem oder mehreren, wie zwei oder drei, Monoazofarbstoffen entsprechend der nachstehend genannten und definierten allgemeinen Formel (2), einem oder mehreren, wie zwei, drei oder vier, Disazofarbstoffen entsprechend der nachstehend genannten und definierten allgemeinen Formel (4) und gegebenenfalls einem oder zwei Monoazofarbstoffen entsprechend der nachstehend genannten und definierten allgemeinen Formel (5) ausgewählt sind, gekennzeichnet sind:

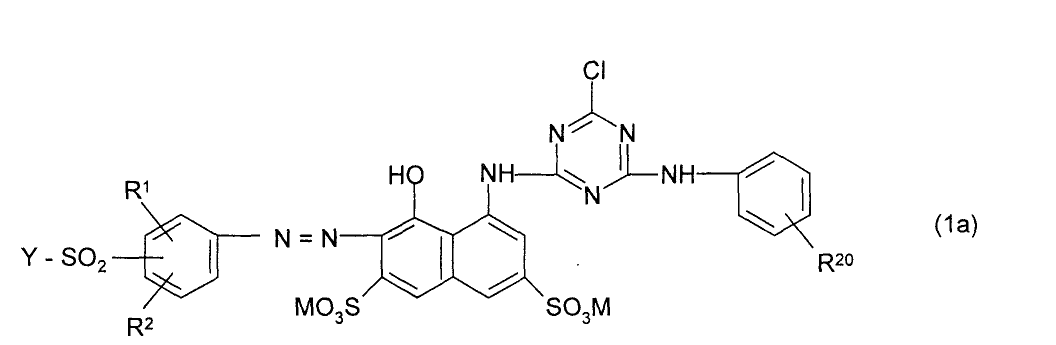

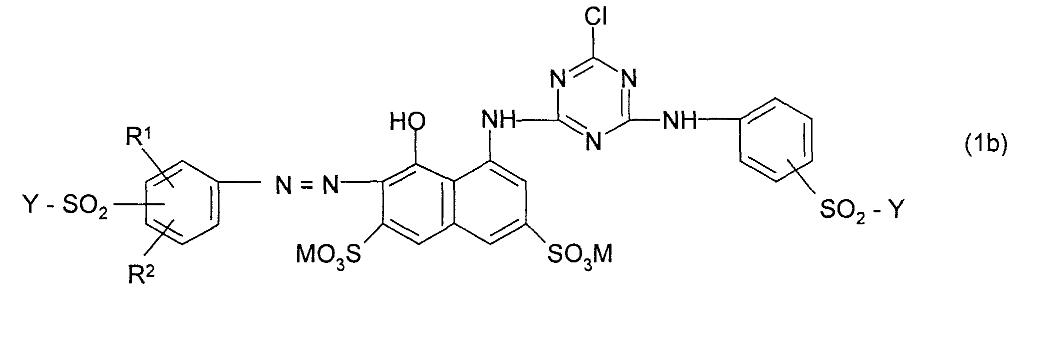

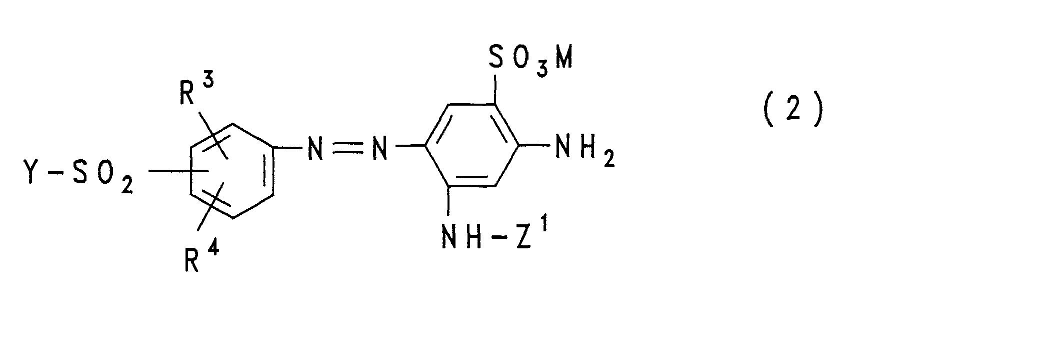

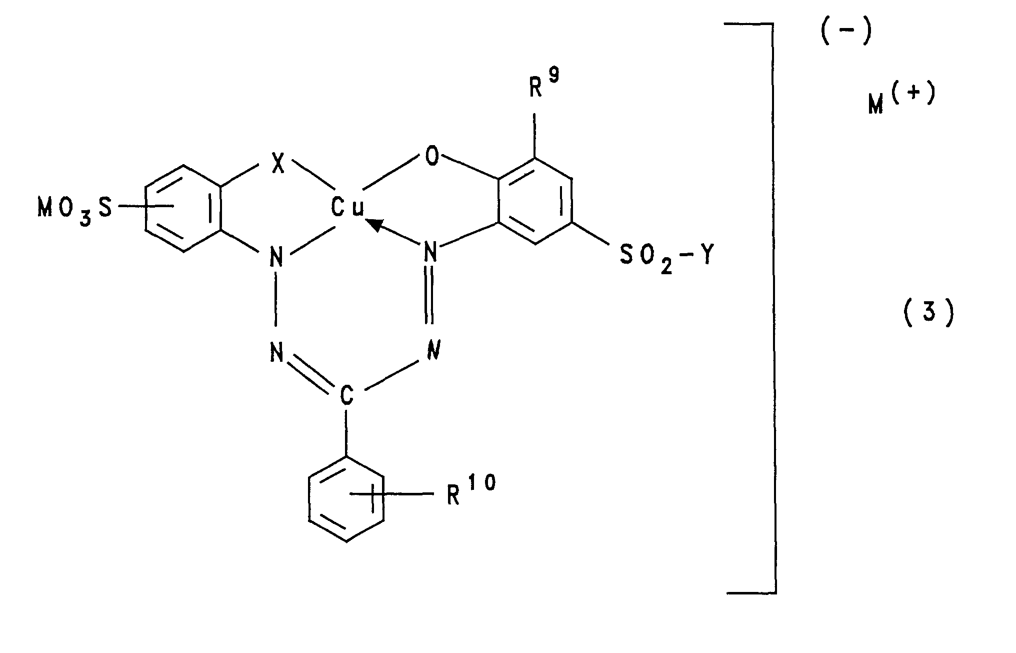

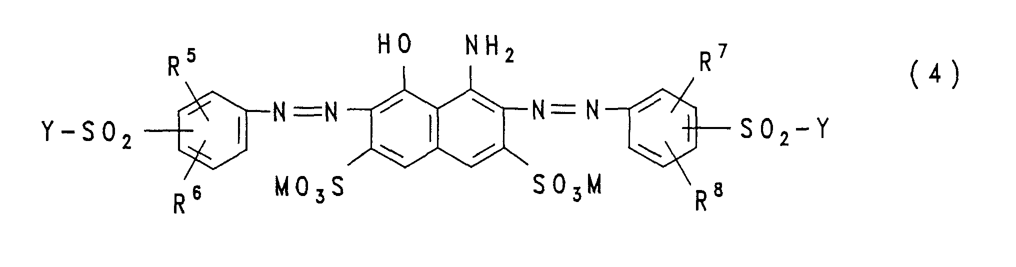

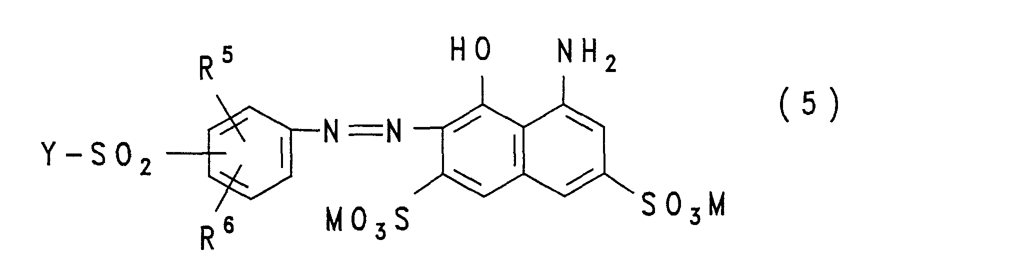

In diesen Formeln bedeuten:
- M: ist Wasserstoff oder ein Alkalimetall, wie Lithium, Natrium und Kalium;
- R¹: ist Wasserstoff, Methyl, Ethyl, Methoxy oder Ethoxy, vorzugsweise Methoxy und Wasserstoff und insbesondere Wasserstoff;
- R²: ist Wasserstoff, Methyl, Ethyl, Methoxy oder Ethoxy, vorzugsweise Wasserstoff;
- R³: ist Wasserstoff, Methyl, Ethyl, Methoxy oder Ethoxy, vorzugsweise Methoxy und Wasserstoff und insbesondere Wasserstoff;
- R⁴: ist Wasserstoff, Methyl, Ethyl, Methoxy oder Ethoxy, vorzugsweise Wasserstoff;
- R⁵: ist Wasserstoff, Methyl, Ethyl, Methoxy oder Ethoxy, vorzugsweise Methoxy und Wasserstoff und insbesondere Wasserstoff;
- R⁶: ist Wasserstoff, Methyl, Ethyl, Methoxy oder Ethoxy, vorzugsweise Wasserstoff;
- R⁷: ist Wasserstoff, Methyl, Ethyl, Methoxy oder Ethoxy, vorzugsweise Methoxy und Wasserstoff und insbesondere Wasserstoff;
- R⁸: ist Wasserstoff, Methyl, Ethyl, Methoxy oder Ethoxy, vorzugsweise Wasserstoff;
- R⁹: ist Wasserstoff oder Sulfo;
- R¹⁰: ist Wasserstoff, Alkyl von 1 bis 4 C-Atomen, wie Methyl oder Ethyl, Sulfo, Carboxy, Alkanoyl von 2 bis 5 C-Atomen, wie Propionyl oder Acetyl, oder eine Gruppe der Formel -SO₂-Y, in welcher Y eine der nachstehend genannten Bedeutungen besitzt, bevorzugt Wasserstoff oder Sulfo;
- R²⁰: ist Wasserstoff, Methyl, Sulfo oder Carboxy;
- X: ist Carbonyloxy der Formel -CO-O- oder Oxy der Formel -O- oder die Gruppe -SO₃⁽⁻⁾, bevorzugt Carbonyloxy;
- Y: ist jedes, unabhängiges voneinander, Vinyl, β-Chlorethyl, β-Thiosulfatoethyl oder β-Sulfatoethyl;
- Z¹: ist Alkanoyl von 2 bis 5 C-Atomen, wie Propionyl und Acetyl, oder ist Benzoyl, 2-Cyanoamino-4-chlor-1,3,5-triazin-6-yl, 2-Cyanoamino-4-fluor-1,3,5-triazin-6-yl, 2,4-Dichlor-1,3,5-triazin-6-yl oder eine Gruppe der allgemeinen Formel (a) 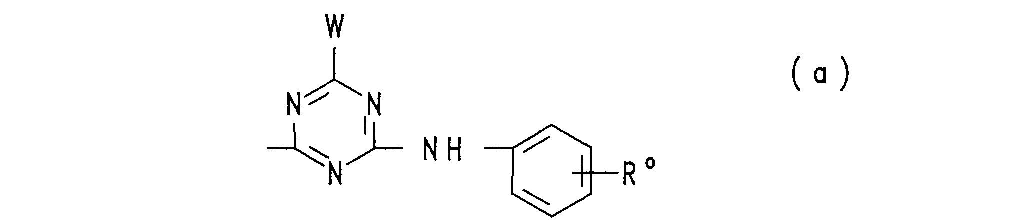 in welcher
W Chlor, Fluor oder Cyanoamino und
R^{o} Sulfo, Carboxy oder eine Gruppe der allgemeinen Formel -SO₂-Y mit Y einer der oben genannten Bedeutungen ist.

Die einzelnen Formelglieder in den Formeln (1), (2), (3), (4) und (5) können im Rahmen ihrer Definition zueinander von gleicher oder verschiedener Bedeutung sein.

Eine Sulfogruppe ist eine Gruppe der allgemeinen Formel -SO₃M, eine Carboxygruppe eine Gruppe der allgemeinen Formel -COOM, eine Sulfatogruppe eine Gruppe der allgemeinen Formel -OSO₃M und eine Thiosulfatogruppe eine Gruppe der allgemeinen Formel -S-SO₃M, jeweils mit M der oben angegebenen Bedeutung.

Die Farbstoffe der allgemeinen Formeln (1) bis (5) sind beispielsweise aus den deutschen Patentschriften Nrs. 960 534 und 965 902 und der U.S.-Patentschrift Nr. 4 257 770, den europäischen Patentschriften Nrs. 0 032 187, 0 094 055, 0 073 481, 0 028 787, 0 028 788 und 0 135 040 bekannt oder können analog den dort beschriebenen Verfahrensweisen hergestellt werden.

Die Gruppen Y-SO₂- stehen bevorzugt in meta- oder para-Stellung zu den Azogruppen bzw. Aminogruppen an den Benzolrest gebunden. Bevorzugt ist Y-SO₂- Vinylsulfonyl und insbesondere bevorzugt β-Sulfatoethylsulfonyl.

Erfindungsgemäßen Mischungen sind insbesondere dadurch gekennzeichnet, daß sie einen oder mehrere, wie zwei, drei oder vier, Monoazofarbstoffe entsprechend der allgemeinen Formel (1a) oder (1b) oder (1a) und (1b) und einen oder zwei Kupferformazanfarbstoffe entsprechend der allgemeinen Formel (3) oder einen oder mehrere, wie zwei, drei oder vier, Disazofarbstoffe entsprechend der allgemeinen Formel (4) oder eine Mischung dieser Farbstoffe der allgemeinen Formeln (3) und (4) und gegebenenfalls einen oder zwei Monoazofarbstoffe entsprechend der allgemeinen Formel (5) enthalten, oder sie sind dadurch gekennzeichnet, daß sie einen oder zwei Kupferformazanfarbstoffe entsprechend der allgemeinen Formel (3) oder einen oder mehrere, wie zwei, drei oder vier, Disazofarbstoffe entsprechend der allgemeinen Formel (4) oder eine Mischung dieser Farbstoffe der allgemeinen Formeln (3) und (4) und einen oder mehrere, wie zwei oder drei, Monoazofarbstoffe entsprechend der allgemeinen Formel (2) und gegebenenfalls einen oder zwei Monoazofarbstoffe entsprechend der allgemeinen Formel (5) enthalten.

In Formel (1a) ist R²⁰ bevorzugt Sulfo. In Formel (2) ist Z¹ bevorzugt Acetyl. Sind in den Farbstoffmischungen Monoazofarbstoffe entsprechend den allgemeinen Formeln (1a) und (1b) enthalten, so sind dies bevorzugt solche Farbstoffe, in welchen die Gruppen Y-SO₂- Vinylsulfonyl und β-Sulfatoethylsulfonyl darstellen und R²⁰ für Sulfo steht.

Die Farbstoffe der allgemeinen Formeln (1) bis (5) können in den erfindungsgemäßen Mischungen in beliebigen Mischungsverhältnissen, die innerhalb des Farbdreiecks zu den gewünschten Nuancen führen oder zu den gewünschten Nuancen beitragen, vorliegen. So können die Mischungen der Farbstoffe (1) und (3) diese Farbstoffe in einem Verhältnis von 99:1 Gew.-% bis 1:99 Gew.-% enthalten. Farbstoffmischungen mit einem Farbstoff (1a) oder (1b) und einer Mischung der Farbstoffe (3) und (4) und gegebenenfalls einem Farbstoff (5) können diese Farbstoffe in einem Verhältnis von 1:99:0 bis 99:1:0 oder von 1:92:7 bis 97,5:2,3:0,2 Gew.-% enthalten.

In gleicher Weise können Farbstoffmischungen der Farbstoffe (2) und (3) die Farbstoffe (2) und (3) in einem Verhältnis von 1:99 bis 99:1 Gew.-% enthalten. In den Farbstoffmischungen mit einem Farbstoff (2) und einer Mischung der Farbstoffe (3) und (4) und gegebenenfalls einem Farbstoff (5) liegen diese Farbstoffe in der Regel ebenso in einem Mischungsverhältnis von 1:99:0 bis 99:1:0 oder von 1:92:7 bis 97,5:2,3:0,2 vor.
Mischungen aus Farbstoffen der Formeln (1), (2) und (3) oder (3) und (4) und gegebenenfalls (5) enthalten diese Farbstoffe in der Regel in folgendem Mischungsverhältnis:
(1) : (2) : (3) im Verhältnis zwischen 1:1:98, 1:98:1 und 98:1:1 Gew.-%;
(1) : (2) : (3) + (4) : (5) im Verhältnis zwischen 1:1:98:0, 1:98:1:0, 98:1:1:0 und 1:1:90:8 Gew.-%.

Sind in den erfindungsgemäßen Farbstoffmischungen zwei oder mehrere Farbstoffe entsprechend den allgemeinen Formeln (1a) und (1b) mit einem oder zweien der Farbstoffe (1a) mit dem Rest R gleich Sulfo enthalten, so liegen die Farbstoffe der Formeln (1a) und (1b) zueinander bevorzugt im Mischungsverhältnis von 75 : 25 bis 25 : 75 Gew.-%, insbesondere von 60 : 40 bis 40 : 60 Gew.-%, vor.

Sind in den erfindungsgemäßen Farbstoffmischungen Farbstoffe der allgemeinen Formeln (3) und (4) enthalten, so liegen der oder die Farbstoffe der Formel (3) und der oder die Farbstoffe der allgemeinen Formel (4) zueinander bevorzugt im Mischungsverhältnis von 75 : 25 bis 25 : 75 Gew.-%, insbesondere von 60 : 40 bis 40 : 60 Gew.-%, vor.

Sind in den erfindungsgemäßen Farbstoffmischungen Farbstoffe der Formel (5) enthalten, so in der Regel zusammen mit den Farbstoffen der allgemeinen Formel (4). Sind sie in Mischungen zusammen mit einem oder mehreren Farbstoffen der Formel (4) enthalten, so mit einem Gehalt von bis zu 10 Gew.-%, bezogen auf die Farbstoffe der Formel (4).

Reste von Diazokomponenten in den allgemeinen Formeln (1), (2), (4) und (5) sowie durch eine Gruppe -SO₂-Y substituiertes Phenyl in den Formeln (1a) und (2) sind beispielsweise 3-(β-Sulfatoethylsulfonyl)-phenyl, 4-(β-Sulfatoethylsulfonyl)-phenyl, 2-Methyl-5-methoxy-4-(β-sulfatoethylsulfonyl)-phenyl, 2-Methoxy-5-(β-sulfatoethylsulfonyl)-phenyl und 2,5-Dimethoxy-4-(β-sulfatoethylsulfonyl)-phenyl sowie deren Vinylsulfonyl-, β-Chlorethylsulfonyl- und β-Thiosulfatoethylsulfonyl-Derivate sowie 3-Sulfo-phenyl und 4-Sulfophenyl, hiervon bevorzugt 2-Methoxy-5-(β-sulfatoethylsulfonyl)-phenyl und 2,5-Dimethoxy-4-(β-sulfatoethylsulfonyl)-phenyl und insbesondere 3-(β-Sulfatoethylsulfonyl)-phenyl und 4-(β-Sulfatoethylsulfonyl)-phenyl bzw. 3-Sulfophenyl.

Die Farbstoffe der Formel (1) bis (5) können, insbesondere bei gleichem Chromophor, innerhalb der Bedeutung von Y unterschiedliche faserreaktive Gruppen -SO₂-Y besitzen. Insbesondere können die Farbstoffmischungen Farbstoffe gleichen Chromophors enthalten, in denen die faserreaktiven Gruppen -SO₂-Y zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind. Ist in den Farbstoffmischungen solch eine Farbstoffkomponente in Form eines Vinylsulfonyl-Farbstoffes vorhanden, so liegt der Anteil dieses Vinylsulfonyl-Farbstoffes zu dem entsprechenden β-Chlor- oder β-Thiosulfato- oder β-Sulfatoethylsulfonyl-Farbstoff bevorzugt bei bis zu etwa 10 Mol-%, bezogen auf den jeweiligen Farbstoffchromophor, vor.

Die erfindungsgemäßen Farbstoffmischungen können als Präparation in fester oder in flüssiger (gelöster) Form vorliegen. Sie enthalten im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, bei Vorliegen in fester Form geringe Mengen an Sikkativen oder die Löslichkeit verbessernden Mitteln, wie die bekannten Naphthalinsulfonsäure-Formaldehyd-Kondensationsprodukte, und in flüssiger Form, wie in wäßriger Lösung (einschließlich des Gehaltes von Verdickungsmitteln, wie sie bei Druckpasten üblich sind), Substanzen, die die Haltbarkeit dieser Präparationen (Gemische) gewährleisten, wie beispielsweise schimmelverhütende Mittel.

Im allgemeinen liegen die erfindungsgemäßen Farbstoffmischungen als elektrolytsalzhaltige Farbstoffpulver mit einem Gesamtfarbstoffgehalt von 20 bis 70 Gew.-%, bezogen auf das Farbstoffpulver bzw. die Präparation, vor. Diese Farbstoffpulver/Präparationen können zudem die erwähnten Puffersubstanzen in einer Gesamtmenge von bis zu 5 Gew.-%, bezogen auf das Farbstoffpulver, enthalten. Sofern die erfindungsgemäßen Farbstoffmischungen in wäßriger Lösung vorliegen, beträgt der Gesamtfarbstoffgehalt in diesen wäßrigen Lösungen bis zu etwa 50 Gew.-%, wie beispielsweise zwischen 5 und 40 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen Farbstoffe oder von Mischungen von 2 oder 3 solcher Einzelfarbstoffe mit den anderen Einzelfarbstoffen in Form von deren Farbstoffpulver oder wäßrigen Lösungen. Werden die erfindungsgemäßen Farbstoffmischungen durch mechanisches Mischen der Einzelfarbstoffe hergestellt, so werden beim Mischen eventuell erforderliche Stellmittel, Entstaubungsmittel oder weitere Hilfsmittel, die in der Färbereitechnik üblich und in den hierzu verwendeten Farbstoffpräparationen üblich sind, zugegeben.

Geht man von wäßrigen Farbstofflösungen der Einzelkomponenten (Einzelfarbstoffe) oder gegebenenfalls von Farbstofflösungen, die bereits zwei oder mehrere dieser Einzelkomponenten enthalten, aus, so gelangt man ebenfalls durch einfaches Vermischen unter Berücksichtigung der Mengen der Farbstofflösungen und deren Farbstoffkonzentrationen zu der gewünschten Farbstoffmischung in wäßriger Form (Flüssigpräparation). Solche wäßrigen Farbstofflösungen der Einzelkomponenten oder Mischungen solcher Einzelkomponenten können auch Syntheselösungen sein, die aus der Synthese der Einzelkomponenten oder, sofern es die Synthese zuläßt, aus der Synthese von Mischungen von Einzelfarbstoffen erhältlich sind. Die so durch Mischung der einzelnen Farbstofflösungen (Syntheselösungen) erhaltenen wäßrigen Lösungen mit den erfindungsgemäßen Farbstoffmischungen können dann direkt, gegebenenfalls nach Filtration, Aufkonzentrieren und/oder Zusatz eines Puffers oder anderer Hilfsstoffe, als Flüssigpräparation der färberischen Verwendung zugeführt werden. Aus ihnen lassen sich aber auch die erfindungsgemäßen pulver- oder granulatförmigen Farbstoffmischungen der gewünschten Zusammensetzung und Einstellung beispielsweise durch Sprühtrocknung und erforderlichenfalls in einem Wirbelbett gewinnen.

Die erfindungsgemäßen wäßrigen Farbstofflösungen mit den erfindungsgemäßen Farbstoffmischungen können jedoch zur Einstellung von gewünschten Farbstoffmischungsverhältnissen und Farbtonnuancen insbesondere vorteilhaft in der Weise gemischt werden, daß man sich der Multikomponentenanalyse mit Hilfe von UV/VIS-Spektren bedient und hiermit die genauen Mengen und Farbstoffkonzentrationen der in den wäßrigen Ausgangslösungen enthaltenen Einzelkomponenten (Einzelfarbstoffe) ermittelt und diese unter Kontrolle eines Steuerungsverfahrens miteinander vermischt. Diese Verfahrensweise basiert auf der Aufzeichnung von UV/VIS-Spektren mit Hilfe eines Photodioden-Spektrometers (s. hierzu auch EP-A-0 385 587) oder eines schnellscannenden Gitterspektrometers mit anschließender Multikomponenten-Analyse, die, nach Eichung mit den reinen Einzelfarbstoffen oder Mischungen solcher Farbstoffe bzw. deren wäßrigen Lösungen, unter mathematischer Zerlegung in die Einzelkomponenten genaue Angaben über die Farbstoffmengen und -konzentrationen in den Lösungen liefert. Zu jedem Zeitpunkt kann über einen Monitor der aktuelle Gehalt der Farbstoffe abgelesen werden. Durch eine hohe Auflösung des Meßgerätes können auch kleinste Absorptions-Schultern erfaßt werden, die zur genauen Abgrenzung der Farbstoffe untereinander dienen.

Es hat sich bewährt, vor Meßbeginn Eichreihen der zu bestimmenden Farbstoffe zu vermessen. Die Eichmessungen können nun sowohl Einzelkomponenten als auch Mischungen mehrerer Komponenten enthalten. Die genauen Konzentrationen werden in das Computerprogramm, getrennt nach Farbstoff, eingegeben. Der Konzentrationsbereich der Eichlösungen sollte den Meßbereich beinhalten. Aus diesen Angaben wird eine Kalibriermatrix errechnet, die zur späteren Bestimmung der Farbstoffkomponenten erforderlich ist. Unter der hier eingesetzten Multikomponenten-Analyse wird die quantitative Analytik von Farbstoffgemischen verstanden, die sich folgender mathematischer Algorithmen bedient: Partial Least Squares Type 1 (PLS-1), Partial Least Squares Type 2 (PLS-2) - Methoden der kleinsten Fehlerquadrate, Principal Component Regression analysis (PCR) sowie Classic Least Squares (CLS) oder Inverse Least Squares (ILS). Die Methode der kleinsten Fehlerquadrate (PLS) sowie die Hauptkomponenten-Regression (PCR) werden bspw. in Anal. Chem. 1988, 60, 1193, Anal. Chem. 1988, 60, 1202 und Anal. Chem. 1990, 62, 1091 von D. Haaland und E. V. Thomas sowie in A. Tutorial, Laboratory for Chemometrics and Center for Process Analytical Chemistry, Dept. of Chemistry, University of Washington, Seattle, WA 98195, von P. Geladi und B. Kowalewski beschrieben. Das Ziel dieser rechnerischen Ansätze ist, mathematische Gleichungen zu erhalten, durch die der Gehalt der unbekannten Mischungen bestimmt werden kann. Das Prinzip des PLS-Algorithmus ist es, die erhältlichen Spektren in eine Reihe mathematischer Spektren zu zerlegen, die als Faktoren beschrieben werden. Eine detaillierte Beschreibung der Vorgehensweise ist aus der angegebenen Literatur erhältlich.

Über einen Zulauf und einen Ablauf werden die einzelnen Farbstofflösungen durch eine Durchflußküvette gepumpt. Der Küvettendurchmesser kann bis zu 0,1 cm klein sein, um auch hochkonzentrierte Lösungen messen zu können. Die Küvette befindet sich in einem UV/VIS-Spektrometer, das entweder ein Diodenzeilen-Spektrometer oder ein schnellscannendes Gitter-Spektrometer ist. Farbstofflösungen von Einzelkomponenten (Einzelfarbstoffen) können direkt spektroskopisch vermessen werden. Bei Farbstoffmischungen, die direkt, ohne aufbereitenden Zwischenschritt, analysierbar sind, kann die ATR-Meßtechnik (Attenuated Total Reflection) eingesetzt werden. Bei dieser Technik wird ein Quarz- oder Alkalimetallglasstab oder eine hierfür geeignete lichttransportierende Vorrichtung in die zu messende Lösung getaucht und an der Grenzfläche zwischen Sondenoberfläche und Flüssigkeit gemessen. Die hierfür üblicherweise eingesetzten Proben haben eine Konzentration von 5 bis 500 g/l Farbstoff. Die ATR-Sonde ist über einen Glasfaserlichtleiter mit dem Spektrometer verbunden. Die Länge des Lichtleiters kann bei Messungen im VIS-Bereich bis zu 1000 m betragen, weswegen das Spektrometer zentral in einer Meßwarte untergebracht werden kann. Bei explosionsgeschützten Betrieben muß so keine weitere Vorsorge getroffen werden.

Um eine erfindungsgemäße wäßrige Lösung der Farbstoffmischung mit einem bestimmten Farbstoffgehalt und einer bestimmten Farbstoffzusammensetzung der Mischung einstellen zu können, muß die Zielmischung eingemessen und ihre Farbkoordinaten und prozentuale Zusammensetzung ermittelt werden. Diese Daten dienen während der Einstellung bzw. Dosierung der Einzelkomponenten als Zielgröße, gegen die die Farbdifferenz und die Einzelkonzentrationen berechnet und graphisch dargestellt werden. Eine Zugabe der hierzu erforderlichen Farbstoffe als Komponenten der Mischung zu einem bereits vorgelegten Farbstoff oder einer Mischung von Farbstoffen der erfindungsgemäßen Mischung erfolgt nun so lange, bis die Zielkonzentrationen sowie der Zielfarbton erreicht ist.

Die Analysenmethode ist in vorteilhafter Weise nicht nur dazu geeignet, Farbstofflösungen in ihrer Zusammensetzung und ihren Farbstoffkonzentrationen, sondern in entsprechender Weise auch Färbeflotten sowie den während des Färbeprozesses in dem Färbebad erfolgenden Badauszug online zu analysieren; dies kann gewünschtenfalls graphisch dargestellt werden. Bei Färbungen von vorbehandelter Baumwolle oder polyamidhaltiger Mischgewebe geht man beispielsweise folgendermaßen vor: Eine wäßrige Farbstoffflotte aus der erfindungsgemäßen Farbstoffmischung und bspw. zwei oder drei anderen, in der Trichromiefärbung verwendbaren Reaktivfarbstoffen wird in einer hierfür üblichen Färbeapparatur vorgelegt; anschließend wird das Textil eingebracht. Die Flotte wird bei Raumtemperatur kontinuierlich umgewälzt, um eine gleichmäßige Färbung zu erzielen. Über einen Zulauf und einen Ablauf wird die Flotte durch dünne Gummi- oder Teflonschläuche durch eine Durchflußküvette gepumpt, wobei der Küvettendurchmesser, wie schon im oberen Fall erwähnt, bis zu 0,1 cm klein sein kann, um auch hochkonzentrierte Flotten messen zu können. Die Küvette befindet sich in einem UV/VIS-Spektrometer, das entweder ein Diodenzeilen-Spektrometer oder ein schnellscannendes Gitter-Spektrometer ist. Da es sich im vorliegenden Fall um eine neutrale Farbstoffflotte handelt, kann diese direkt spektroskopisch vermessen werden oder es kann alternativ bei Farbstoffmischungen, die direkt und ohne aufbereitenden Zwischenschritt analysierbar sind, die ATR-Meßtechnik (Attenuated Total Reflection) eingesetzt werden in der gleichen Weise, wie oben für die Herstellung der wäßrigen Farbstoffmischungen beschrieben.

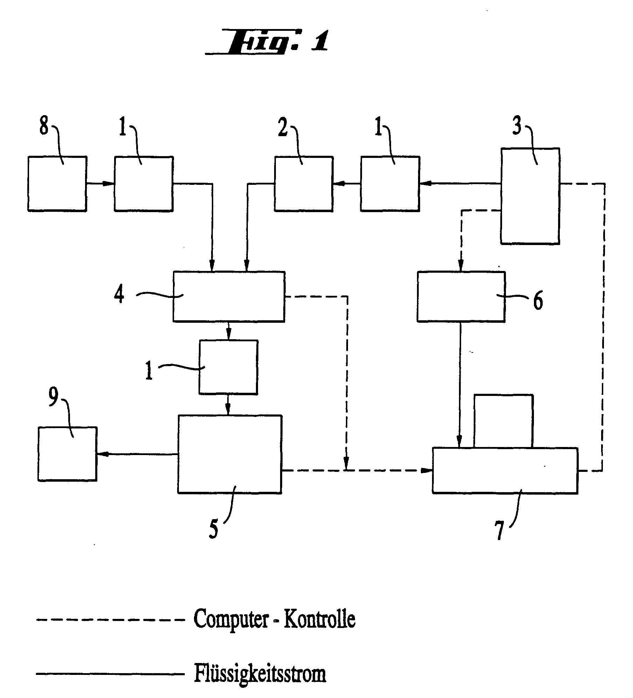

Bei Beginn des Färbeprozesses wird mit der kontinuierlichen Messung am Spektrometer begonnen. Das Computerprogramm startet eine Messung am Spektrometer und verarbeitet das aufgezeichnete Spektrum mit Hilfe der Multikomponenten-Analyse. Die hieraus ermittelten Konzentrationen werden in Prozent Ausgangsmenge umgerechnet und graphisch am Bildschirm angezeigt. Bei der Trichromie kann man nun bspw. ermitteln, in welchem Umfange und Qualitätsausmaß die erfindungsgemäße Farbstoffmischung zu bestimmten, in der Trichromie üblicherweise einsetzbaren blaufärbenden, rotfärbenden und orange- oder gelbfärbenden Reaktivfarbstoffe passend eingesetzt werden können und wie sich in diesem Prozeß die Baderschöpfung ergibt. Färberelevante Einflüsse, die die Zugabe von Zusatzstoffen, wie bspw. Elektkrolysesalze und Alkali, oder auch Temperaturänderungen betreffen, werden auf diese Weise ebenso schnell und zweifelsfrei erkannt. Der Trichromiefärbeprozeß läßt sich auf diese Weise leicht überwachen. Dies kann in der Weise geschehen, daß man von der Färbeflotte kontinuierlich kleine Proben entnimmt, die mit Pufferlösung neutralisiert werden, wie dies in oben beschriebener Weise mit den Eichlösungen erfolgte. Zweifelsohne ist es wichtig, daß die Eichungen bei denselben Bedingungen vorgenommen wurden wie die spätere Messung, denn die Absorptionen und Extinktionen der Farbstoffe können sich bei höheren pH-Werten ändern. Diese Probe, bspw. von 0,5 ml, kann bspw. in der Weise der Flotte entnommen werden, indem man diese mit einer Pumpe (1) (s. hierzu
Figur 1) durch einen dünnen Teflon- oder Gummischlauch im Kreis pumpt und ein darin befindliches Ventil (2) für eine kurze Zeitdauer, die einem 0,5 ml-Durchfluß entspricht, öffnet. Die entnommene Probe wird mit einer pH 7-Pufferlösung aus einem Puffervorratsgefäß (8) abgestumpft, mit Wasser verdünnt und mittels einer Pumpe durch eine Durchflußküvette des UV/VIS-Spektrometers (5) und schließlich in das Abfallgefäß (9) gepumpt. Die Mischung der Probe und der Pufferlösung wird in oder durch einen Autosampler (4) vorgenommen, der dem UV/VIS-Meßgerät (5) ein Startsignal übermittelt. Die Zeitsteuerung wird in diesem Fall von dem langsameren Aufbereitungsschritt getriggert. Durch ein pH-Wert- und Temperatur-Meßgerät (6) kann außerdem eine Abhängigkeit des Färbeprozesses von diesen Parametern erkannt werden. Durch ein geeignetes Programm des Computers (7) kann zum Beispiel eine Pumpe durch Zupumpen von Lauge den pH-Wert während der Färbung kontinuierlich anheben. Dies entspricht einem Automet-Verfahren (s. insbesondere ® Remazol Automet) bei Färbungen, das jedoch nicht nur nach einem voreingestellten Algorithmus abläuft, sondern auch von dem Ausziehgrad der Farbstoffe gesteuert werden kann.

Die verbrauchte Flotte kann anschließend mit der notwendigen Menge Farbstoff und erforderlichenfalls Wasser wieder aufkonzentriert werden. Die Aufkonzentration wird ebenso mit der Multikomponenten-Analyse überwacht.

Die erfindungsgemäßen Farbstoffmischungen liefern je nach Zusammensetzung der einzelnen Farbstoffkomponenten nach den in der Technik für faserreaktive Farbstoffe zahlreich beschriebenen Anwendungs- und Fixierverfahren, insbesondere nach den Verfahrensweisen der Trichromiefärbung, auf hydroxy- und/oder carbonamidgruppenhaltigen Fasermaterialien Färbungen unterschiedlicher Farbnuancen mit gutem Farbaufbau und insbesondere guter Auswaschbarkeit nicht fixierter Farbstoffanteile aus den gefärbten Materialien.

Gegenstand der vorliegenden Erfindung ist somit auch die Verwendung der erfindungsgemäßen Farbstoffmischungen oder von einem oder zwei der Farbstoffe der allgemeinen Formel (3) und einem oder mehreren der Farbstoffe der allgemeinen Formeln (1a), (1b), (2) und/oder (4) und gegebenenfalls (5) gemeinsam oder teilweise gemeinsam, insbesondere in einem Trichromiefärbeprozeß, zum Färben (einschließlich Bedrucken) von hydroxy- und/oder carbonamidgruppenhaltigen Fasermaterialien bzw. Verfahren zum Färben solcher Fasermaterialien unter Verwendung einer erfindungsgemäßen Farbstoffmischung oder von einem oder zwei der Farbstoffe der allgemeinen Formel (3) und einem oder mehreren der Farbstoffe der allgemeinen Formeln (1a), (1b), (2) und/oder (4) und gegebenenfalls (5) gemeinsam oder teilweise gemeinsam, insbesondere in einem Trichromiefärbeprozeß, indem man die Farbstoffmischung bzw. diese Farbstoffe in gelöster Form auf das Substrat appliziert und die Farbstoffe durch Einwirkung eines alkalisch wirkenden Agens oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen insbesondere mit Vorteil in den Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und, im wesentlichen unabhängig von der Färbedauer, gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt.

Ebenfalls erhält man nach den üblichen Druckverfahren für Cellulosefasern - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe der erfindungsgemäßen Farbstoffmischungen mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

Sofern in den Beispielen die Formeln der Farbstoffe in Form der freien Säure angegeben sind, beziehen sich die Mengenteile auf die saure Form. In der Regel werden die Farbstoffe jedoch in der für wasserlösliche Farbstoffe üblich vorliegenden Form als elektrolytsalzhaltiges (beispielsweise natriumchlorid- und natriumsulfathaltiges) Alkalimetallsalz-Pulver eingesetzt.

### Beispiel 1

47 Teile einer wäßrigen Lösung, wie bspw. einer aus der Synthese erhältlichen wäßrigen Lösung, mit 23,5 Teilen des Kupferformazanfarbstoffes der Formel (G) 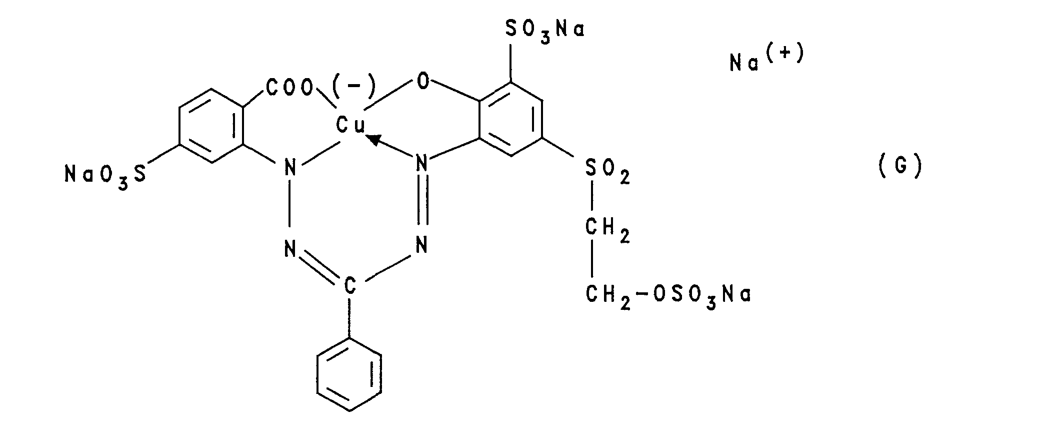 3 Teile einer wäßrigen Lösung, wie bspw. einer aus der Synthese erhältlichen wäßrigen Lösung, mit 1 Teil des roten Monoazofarbstoffes der Formel (C) 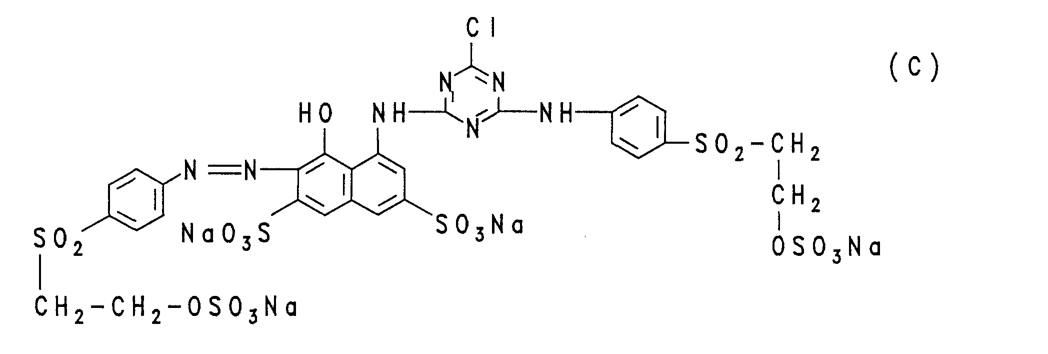 und 15 Teile einer wäßrigen Lösung, wie bspw. einer aus der Synthese erhältlichen wäßrigen Lösung, mit 5 Teilen des goldgelbfärbenden Monoazofarbstoffes der Formel (D) 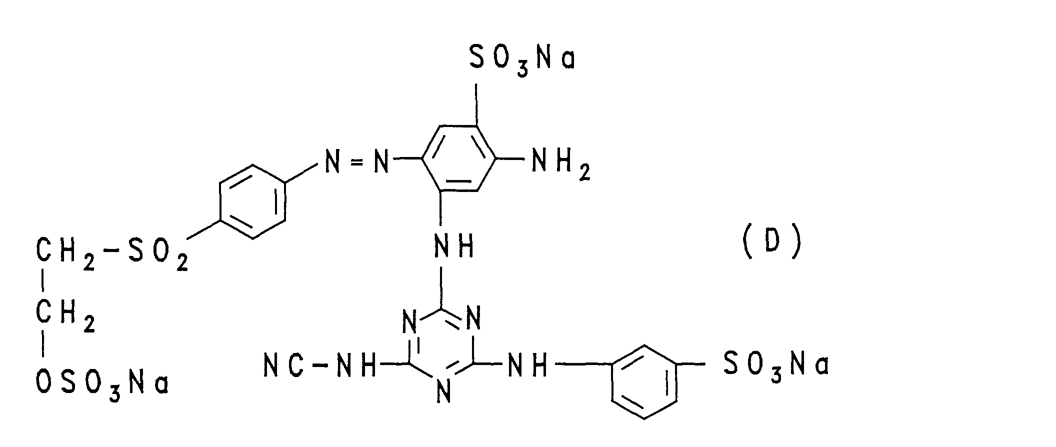 (wobei diese Lösungen noch Elektrolytsalze, wie Natriumchlorid, oder übliche Hilfsmittel, wie bspw. Puffer und tensidische Stoffe, enthalten können bzw. enthalten) werden miteinander vermischt.

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Die erfindungsgemäße Farbstoffmischung liefert nach den in der Technik für faserreaktive Farbstoffe üblichen Applikations- und Fixierverfahren beispielsweise auf Cellulosefasermaterialien farbstarke, egale graue Färbungen und Drucke mit guten Echtheitseigenschaften.

### Beispiel 2

20 Teile einer wäßrigen Lösung, wie bspw. einer aus der Synthese erhältlichen wäßrigen Lösung, mit 10 Teilen des Kupferformazanfarbstoffes der Formel (G), 20 Teile einer wäßrigen Lösung, wie bspw. einer aus der Synthese erhältlichen wäßrigen Lösung, mit 10 Teilen des marineblaufärbenden Disazofarbstoffes der Formel (A) und 1 Teil des rotfärbenden Monoazofarbstoffes der Formel (B), 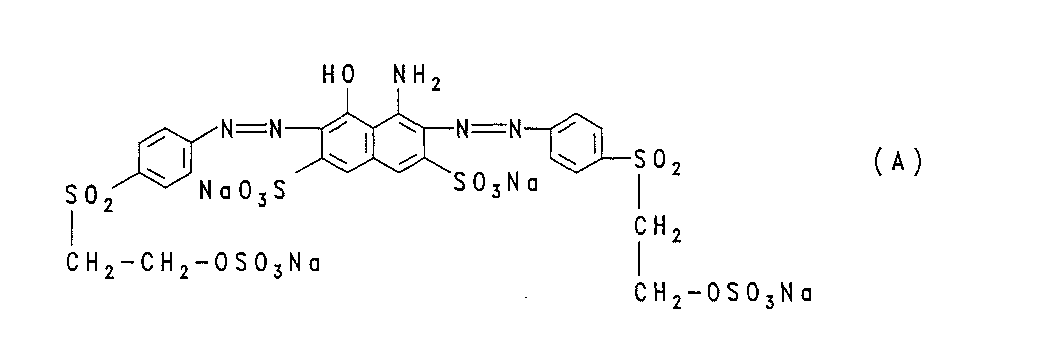 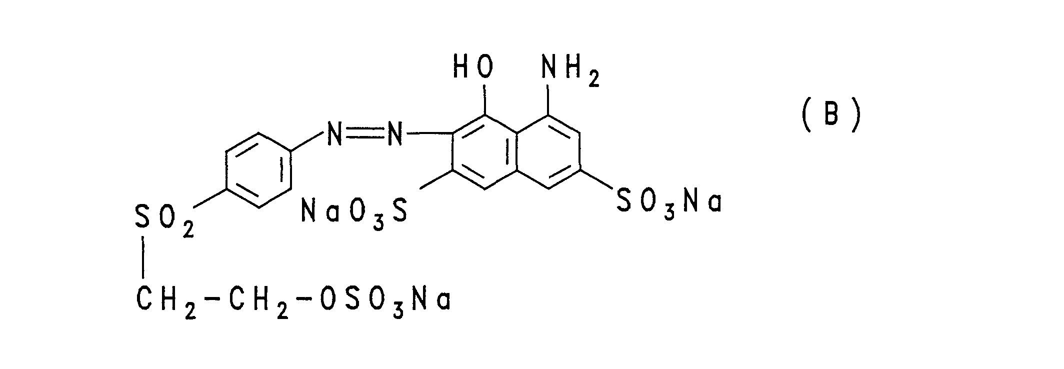 6 Teile einer wäßrigen Lösung, wie bspw. einer aus der Synthese erhältlichen wäßrigen Lösung, mit 2 Teilen des roten Monoazofarbstoffes der Formel (C) und 21 Teile einer wäßrigen Lösung, wie bspw. einer aus der Synthese erhältlichen wäßrigen Lösung, mit 7 Teilen des goldgelbfärbenden Monoazofarbstoffes der Formel (D) (wobei diese Lösungen noch Elektrolytsalze, wie Natriumchlorid, oder übliche Hilfsmittel, wie bspw. Puffer und tensidische Stoffe, enthalten können bzw. enthalten) werden miteinander vermischt.

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Die erfindungsgemäße Farbstoffmischung liefert nach den in der Technik für faserreaktive Farbstoffe üblichen Applikations- und Fixierverfahren beispielsweise auf Cellulosefasermaterialien farbstarke, egale schwarze Färbungen und Drucke mit guten Echtheitseigenschaften.

### Beispiel 3

33 Teile eines elektrolytsalzhaltigen (vorwiegend natriumchloridhaltigen) Farbstoffpulvers des Farbstoffes der Formel (C) mit einem Farbstoffgehalt von 50 %, 20,5 Teile eines elektrolytsalzhaltigen Farbstoffpulvers des Farbstoffes der Formel (D) mit einem Farbstoffgehalt von 50 % und 15,5 Teile einer Mischung eines elektrolytsalzhaltigen Farbstoffpulvers der Farbstoffe der Formeln (A), (B) und (G) mit einem Farbstoffgehalt von 25 % des Farbstoffes (A), von 0,5 % des Farbstoffes (B) und von 25 % des Farbstoffes (G) werden miteinander mechanisch vermischt.

Die erhaltene erfindungsgemäße Farbstoffmischung liefert nach in der Technik für faserreaktive Farbstoffe üblichen Färbe- und Druckverfahren, beispielsweise wie in den nachfolgenden Beispielen A bis F beschrieben, farbstarke dunkelrote egale Färbungen und Drucke von guten Echtheitseigenschaften.

### Beispiele 4 bis 11

In den nachfolgenden Tabellenbeispielen sind weitere erfindungsgemäße Farbstoffmischungen beschrieben, die auf den in der Beschreibung genannten Materialien, insbesondere Cellulosefasermaterialien, wie Baumwolle, nach den in der Technik für faserreaktive Farbstoffe üblichen Färbe- und Druckverfahren egale Färbungen und Drucke mit den in dem jeweiligen Tabellenbeispiel angegebenen Farbton liefern (in dem jeweiligen Tabellenbeispiel ist der Farbton bei mittlerer Farbtiefe angegeben, die mit der erfindungsgemäßen Farbstoffmischung erhalten werden kann; je nach Einsatzmenge der Farbstoffmischung in das Färbebad, die Färbeflotte oder Druckpaste ergeben sich naturgemäß hellere oder dunklere Farbtöne).

| Beispiel | Farbstoffmischung, enthaltend | Farbton |
|---|---|---|
| 4 | 93,3 % Farbstoff (F) | |
| | + 1,95 % Farbstoff (E) | |
| | + 4,75 % Farbstoff (G) | orangebraun |
| 5 | 82 % Farbstoff (F) | |
| | + 8,4 % Farbstoff (C) | |
| | + 9,6 % Farbstoff (G) | braun |
| 6 | 66,7 % Farbstoff (D) | |
| | + 11,65 % Farbstoff (C) | |
| | + 11,65 % Farbstoff (E) | |
| | + 5,0 % Farbstoff (G) | |
| | + 4,5 % Farbstoff (A) | |
| | + 0,5 % Farbstoff (B) | rotbraun |
| 7 | 4,85 % Farbstoff (C) | |
| | + 4,85 % Farbstoff (E) | |
| | + 44,5 % Farbstoff (G) | |
| | + 43,4 % Farbstoff (A) | |
| | + 2,4 % Farbstoff (B) | blau |
| 8 | 91,9 % Farbstoff (F) | |
| | + 3,5 % Farbstoff (E) | |
| | + 4,6 % Farbstoff (G) | orangebraun |
| 9 | 84,5 % Farbstoff (F) | |
| | + 6,5 % Farbstoff (C) | |
| | + 9,0 % Farbstoff (G) | braun |
| 10 | 70,8 % Farbstoff (D) | |
| | + 9,9 % Farbstoff (E) | |
| | + 9,9 % Farbstoff (C) | |
| | + 4,7 % Farbstoff (G) | |
| | + 4,6 % Farbstoff (A) | |
| | + 0,1 % Farbstoff (B) | rotbraun |
| 11 | 3,2 % Farbstoff (C) | |
| | + 3,2 % Farbstoff (E) | |
| | + 35,5 % Farbstoff (G) | |
| | + 56,5 % Farbstoff (A) | |
| | + 1,6 % Farbstoff (B) | blau |

### Beispiel A

100 Teile eines mercerisierten, gebleichten Baumwolltrikots werden in einer Jet-Färbeanlage mit 1000 Teilen einer wäßrigen Lösung, die 1 Teil des rotfärbenden Monoazofarbstoffes der Formel (E), 1 Teil des gelbfärbenden Monoazofarbstoffes der Formel (D) und 1 Teil des blaufärbenden

Kupferformazanfarbstoffes der Formel (G) sowie 80 Teile wasserfreies Natriumsulfat, 5 Teile einer wäßrigen 15 %igen Natriumcarbonatlösung und 2 Vol.-Teile einer 33 %igen wäßrigen Natriumhydroxidlösung enthält, während 60 Minuten bei einer Färbetemperatur von 60°C gefärbt. Danach wird die Färbeflotte abgelassen und das gefärbte Trikot zunächst mit kaltem, sodann mit heißem und mit kochendem Wasser gespült, in einer wäßrigen Waschlösung, die in 1000 Teilen etwa 1 bis 2 Teile eines nichtionogenen handelsüblichen Waschmittels enthält, während 15 Minuten bei 95 bis 100°C behandelt, erneut mit heißem und mit kaltem Wasser gespült und anschließend geschleudert und getrocknet.
Es wird eine egale rotbraune Färbung mit guten Echtheitseigenschaften erhalten.

### Beispiel B

100 Teile eines mercerisierten, gebleichten Baumwolltrikots werden in eine Jet-Färbeanlage, die 1000 Teile einer wäßrigen Lösung mit 1 Teil des gelbfärbenden Farbstoffes der Formel (D), 0,5 Teile des rotfärbenden Farbstoffes der Formel (C), 0,5 Teile des rotfärbenden Farbstoffes der Formel (E), 0,3 Teile des marineblaufärbenden Farbstoffes der Formel (A) und 0,2 Teile des blaufärbenden Farbstoffes der Formel (G) sowie 80 Teile Natriumsulfat enthält, eingetragen. Das Trikot wird zunächst in der Färbeflotte von 20°C etwa fünf Minuten bewegt; sodann werden unter weiterer Bewegung der Färbeflotte fünf Teile einer 15 %igen wäßrigen Natriumcarbonatlösung und 2 Teile einer 33 %igen wäßrigen Natriumhydroxidlösung hinzugegeben. Die Färbeflotte wird innerhalb von 15 Minuten stetig auf 60°C erwärmt und der Färbeprozeß bei 60°C noch weitere 60 Minuten weitergeführt. Anschließend wird die Färbeflotte abgelassen und das gefärbte Trikot gemäß den Angaben des Beispieles A gespült, nachbehandelt und fertiggestellt.
Es wird eine egale braune Färbung mit guten Echtheitseigenschaften erhalten.

### Beispiel C

100 Teile eines mercerisierten, gebleichten Baumwolltrikots werden in eine Jet-Färbeanlage, die 1000 Teile einer wäßrigen Lösung mit 0,3 Teile des gelbfärbenden Farbstoffes der Formel (D), 0,3 Teile des rotfärbenden Farbstoffes der Formel (C), 0,3 Teile des rotfärbenden Farbstoffes der Formel (E), 0,3 Teile des marineblaufärbenden Farbstoffes der Formel (A) und 0,2 Teile des blaufärbenden Farbstoffes der Formel (G) sowie 80 Teile Natriumsulfat enthält, eingetragen. Das Trikot wird zunächst in der Färbeflotte von 20°C etwa fünf Minuten bewegt; sodann werden unter weiterer Bewegung der Färbeflotte 5 Teile einer 15 %igen wäßrigen Natriumcarbonatlösung und 2 Teile einer 33 %igen wäßrigen Natriumhydroxidlösung hinzugegeben. Die Färbeflotte wird innerhalb von 15 Minuten stetig auf 60°C erwärmt und der Färbeprozeß bei 60°C noch weitere 60 Minuten weitergeführt. Anschließend wird die Färbeflotte abgelassen und das gefärbte Trikot gemäß den Angaben des Beispieles A gespült, nachbehandelt und fertiggestellt.
Es wird eine egale beige Färbung mit guten Echtheitseigenschaften erhalten.

### Beispiel D

100 Teile eines mercerisierten, gebleichten Baumwolltrikots werden in einer Jet-Färbeanlage während 60 Minuten bei 60°C in 1000 Teilen einer wäßrigen Färbelösung, die 1 Teil des gelbfärbenden Farbstoffes der Formel (D), 1 Teil des rotfärbenden Farbstoffes der Formel (C), 0,25 Teile des marineblaufärbenden Farbstoffes der Formel (A), 0,25 Teile des blaufärbenden Kupferformazanfarbstoffes der Formel (G) sowie 50 Teile Natriumsulfat, 5 Teile einer 15 %igen wäßrigen Natriumcarbonatlösung und 2 Teile einer 33 %igen wäßrigen Natriumhydroxidlösung enthält, gefärbt. Anschließend wird das erhaltene, gefärbte Baumwolltrikot in üblicher Weise, wie beispielsweise in Beispiel A angegeben, nachbehandelt und fertiggestellt.
Es wird eine egale braune Färbung mit guten Echtheitseigenschaften erhalten.

### Beispiel E

100 Teile eines mercerisierten, gebleichten Baumwolltrikots werden in einer Jet-Färbeanlage während 60 Minuten bei 60°C in 1000 Teilen einer wäßrigen Färbelösung, die 0,2 Teile des gelbfärbenden Farbstoffes der Formel (F), 0,1 Teile des rotfärbenden Monoazofarbstoffes der Formel (C), 0,1 Teile des rotfärbenden Farbstoffes der Formel (E), 0,12 Teile des Kupferformazanfarbstoffes der Formel (G) und 0,18 Teile des marineblaufärbenden Farbstoffes der Formel (A) sowie 50 Teile Natriumsulfat, 5 Teile einer wäßrigen 15 %igen Natriumcarbonatlösung und 2 Teile einer 33 %igen wäßrigen Natriumhydroxidlösung enthält, gefärbt. Anschließend wird das erhaltene, gefärbte Baumwolltrikot in üblicher Weise, wie beispielsweise in Beispiel A angegeben, nachbehandelt und fertiggestellt.
Es wird eine egale braune Färbung mit guten Echtheitseigenschaften erhalten.

### Beispiel F

40 Teile des Farbstoffes der Formel (F) (in Form seines elektrolytsalzhaltigen Farbstoffpulvers), 1,5 Teile des Farbstoffes der Formel (C) (in Form seines elektrolytsalzhaltigen Farbstoffpulvers) und 2 Teile des Farbstoffes der Formel (G) (in Form seines elektrolytsalzhaltigen Farbstoffpulvers) werden in 1000 Teilen Wasser von etwa 20°C gelöst. Zu dieser Farbstofflösung werden 25 Teile einer 33 %igen wäßrigen Natronlauge und 95 Teile Wasserglas von 38° Bé gegeben. Mercerisierte Baumwollpopeline wird mit dieser Färbeflotte auf einem handelsüblichen Foulard mit einer Flottenaufnahme von etwa 70 % geklotzt, auf eine Docke aufgewickelt, in eine Plastikfolie eingehüllt und bei 20°C mehrere Stunden verweilen lassen. Anschließend wird das gefärbte Gewebe wie üblich nachbehandelt und fertiggestellt, wie bpsw. in der im Beispiel A angegebenen Weise.
Man erhält eine egale orangebraune Färbung mit guten Echtheitseigenschaften.

### Beispiele G-1 bis G-8

Man verfährt gemäß der Verfahrensweise des Beispieles A zur Färbung von 100 Teilen eines mercerisierten, gebleichten Baumwolltrikots und setzt hierzu als Färbeflotte 1000 Teile einer wäßrigen Lösung hinzu, die die in den nachfolgenden Tabellenbeispielen beschriebene Farbstoffmischung sowie die in Beispiel A angegebenen Elektrolytsalze und alkalisch wirkenden Mitteln enthält. Nach Fertigstellung der Färbungen gemäß den in Beispiel A angegebenen Bedingungen erhält man egale Färbungen in den in dem jeweiligen
Tabellenbeispiel angegebenen Farbton.

| Beispiel | in der Färbeflotte enthaltene Farbstoffe | Farbton der Färbung |
|---|---|---|
| G-1 | 33,5 Teile Farbstoff (F) | |
| | + 0,7 Teile Farbstoff (E) | |
| | + 1,7 Teile Farbstoff (G) | orangebraun |
| G-2 | 27,4 Teile Farbstoff (F) | |
| | + 2,8 Teile Farbstoff (C) | |
| | + 3,2 Teile Farbstoff (G) | braun |
| G-3 | 28 Teile Farbstoff (D) | |
| | + 4,9 Teile Farbstoff (C) | |
| | + 4,9 Teile Farbstoff (E) | |
| | + 2,1 Teile Farbstoff (G) | |
| | + 1,9 Teile Farbstoff (A) | |
| | + 0,2 Teile Farbstoff (B) | rotbraun |
| G-4 | 1,4 Teile Farbstoff (C) | |
| | + 1,4 Teile Farbstoff (E) | |
| | + 12,8 Teile Farbstoff (G) | |
| | + 12,5 Teile Farbstoff (A) | |
| | + 0,7 Teile Farbstoff (B) | dunkelblau |
| G-5 | 40 Teile Farbstoff (F) | |
| | + 1,5 Teile Farbstoff (E) | |
| | + 2,0 Teile Farbstoff (G) | orangebraun |
| G-6 | 35 Teile Farbstoff (F) | |
| | + 2,7 Teile Farbstoff (C) | |
| | + 3,7 Teile Farbstoff (G) | braun |
| G-7 | 34 Teile Farbstoff (D) | |
| | + 4,75 Teile Farbstoff (E) | |
| | + 4,75 Teile Farbstoff (C) | |
| | + 2,25 Teile Farbstoff (G) | |
| | + 2,2 Teile Farbstoff (A) | |
| | + 0,05 Teile Farbstoff (B) | rotbraun |
| G-8 | 0,9 Teile Farbstoff (C) | |
| | + 0,9 Teile Farbstoff (E) | |
| | + 10 Teile Farbstoff (G) | |
| | + 16 Teile Farbstoff (A) | |
| | + 0,5 Teile Farbstoff (B) | dunkelblau |

## Patentansprüche

1. Farbstoffmischung, gekennzeichnet durch den Gehalt eines oder zweier Kupferformazanfarbstoffe entsprechend der nachstehend genannten und definierten allgemeinen Formel (3) und eines oder mehrerer Azofarbstoffe, die aus der Gruppe von einem oder mehreren Monoazofarbstoffen entsprechend der nachstehend genannten und definierten allgemeinen Formel (1a) oder (1b) oder (1a) und (1b), einem oder mehreren Monoazofarbstoffen entsprechend der nachstehend genannten und definierten allgemeinen Formel (2), einem oder mehreren Disazofarbstoffen entsprechend der nachstehend genannten und definierten allgemeinen Formel (4) und gegebenenfalls einem oder zwei Monoazofarbstoffen entsprechend der nachstehend genannten und definierten allgemeinen Formel (5) ausgewählt sind: 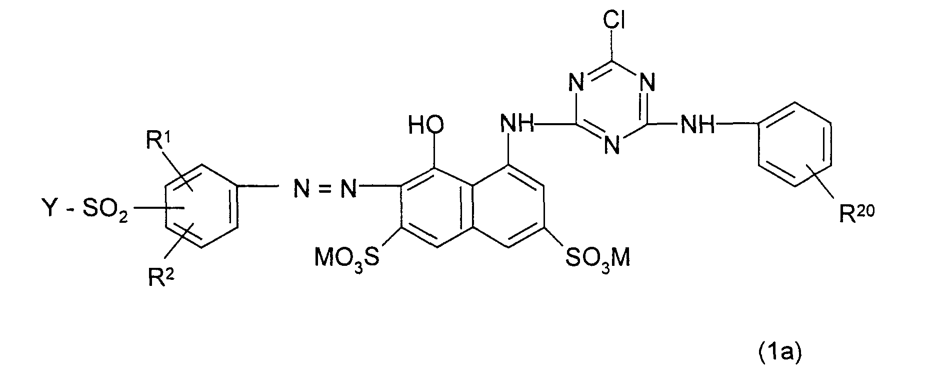 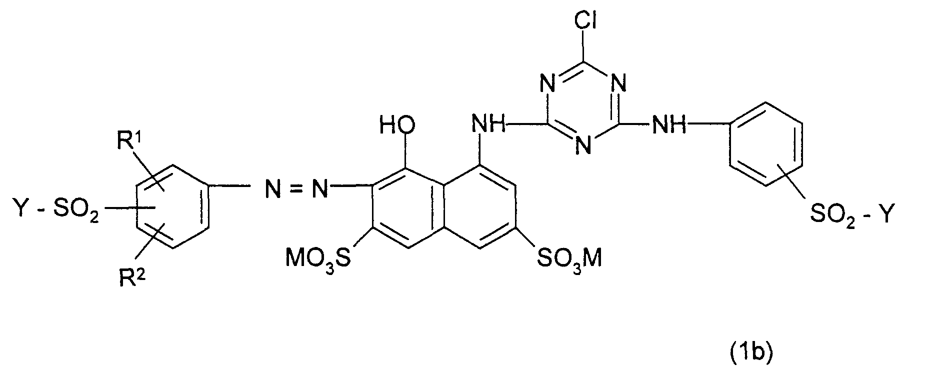 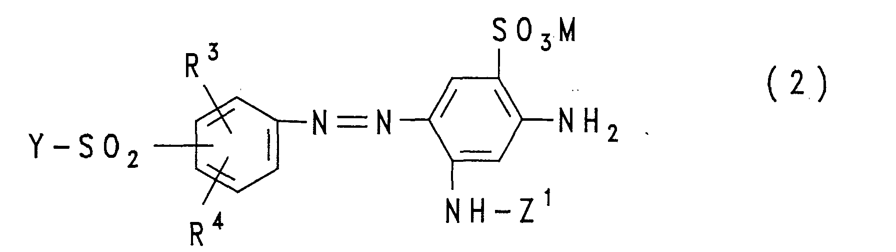 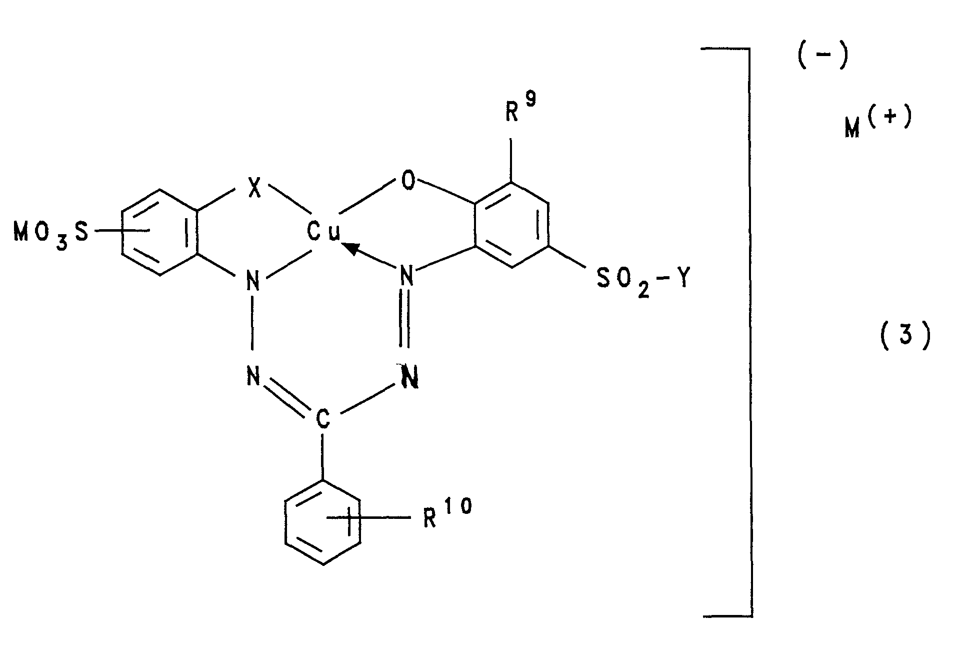 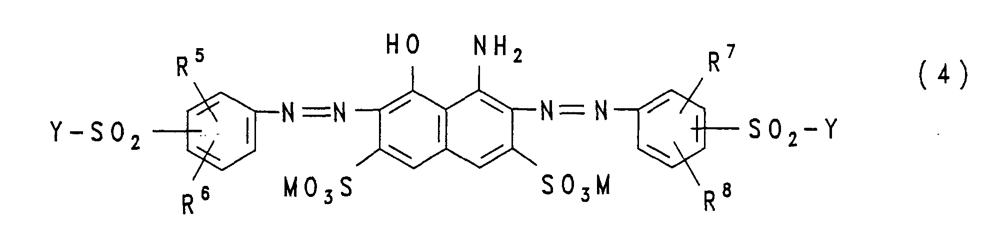 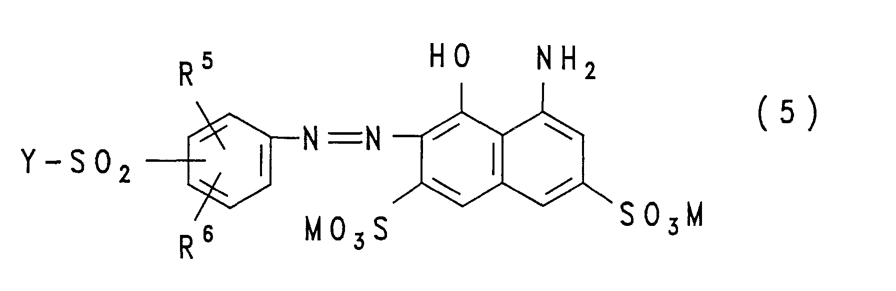 worin bedeuten:
M ist Wasserstoff oder ein Alkalimetall;
R¹ ist Wasserstoff, Methyl, Ethyl, Methoxy oder Ethoxy;
R² ist Wasserstoff, Methyl, Ethyl, Methoxy oder Ethoxy;
R³ ist Wasserstoff, Methyl, Ethyl, Methoxy oder Ethoxy;
R⁴ ist Wasserstoff, Methyl, Ethyl, Methoxy oder Ethoxy;
R⁵ ist Wasserstoff, Methyl, Ethyl, Methoxy oder Ethoxy;
R⁶ ist Wasserstoff, Methyl, Ethyl, Methoxy oder Ethoxy;
R⁷ ist Wasserstoff, Methyl, Ethyl, Methoxy oder Ethoxy;
R⁸ ist Wasserstoff, Methyl, Ethyl, Methoxy oder Ethoxy,
R⁹ ist Wasserstoff oder Sulfo;
R¹⁰ ist Wasserstoff, Alkyl von 1 bis 4 C-Atomen, Sulfo, Carboxy, Alkanoyl von 2 bis 5 C-Atomen oder eine Gruppe der Formel -SO₂-Y, in welcher Y eine der nachstehend genannten Bedeutungen besitzt;
R²⁰ ist Wasserstoff, Methyl, Sulfo oder Carboxy;
X ist Carbonyloxy der Formel -CO-O- oder Oxy der Formel -O- oder die Gruppe -SO₃⁽⁻⁾;
Y ist jedes, unabhängiges voneinander, Vinyl, β-Chlorethyl, β-Thiosulfatoethyl oder β-Sulfatoethyl;
Z¹ ist Alkanoyl von 2 bis 5 C-Atomen, Benzoyl, 2-Cyanoamino-4-chlor-1,3,5-triazin-6-yl, 2-Cyanoamino-4-fluor-1,3,5-triazin-6-yl, 2,4-Dichlor-1,3,5-triazin-6-yl oder eine Gruppe der allgemeinen Formel (a) 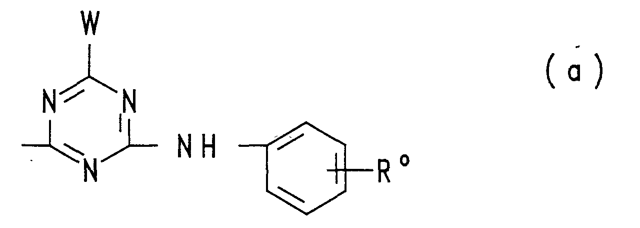 in welcher
W Chlor, Fluor oder Cyanoamino und
R^{o} Sulfo, Carboxy oder eine Gruppe der allgemeinen Formel -SO₂-Y mit Y einer der oben genannten Bedeutungen ist.

2. Farbstoffmischung nach Anspruch 1, gekennzeichnet durch den Gehalt eines oder mehrerer Monoazofarbstoffe der allgemeinen Formel (1a) oder (1b) oder einer Mischung derselben und eines oder zweier Kupferformazanfarbstoffe entsprechend der allgemeinen Formel (3), oder durch den Gehalt eines oder mehrerer Monoazofarbstoffe entsprechend der allgemeinen Formel (1a) oder (1b) oder einer Mischung derselben, eines oder zweier Kupferformazanfarbstoffe entsprechend der allgemeinen Formel (3), eines oder mehrerer Disazofarbstoffe entsprechend der allgemeinen Formel (4) und gegebenenfalls eines oder zweier Monoazofarbstoffe entsprechend der allgemeinen Formel (5).

3. Farbstoffmischung nach Anspruch 1, gekennzeichnet durch den Gehalt eines oder mehrerer Monoazofarbstoffe entsprechend der allgemeinen Formel (2) und eines oder zweier Kupferformazanfarbstoffe entsprechend der allgemeinen Formel (3), oder durch den Gehalt eines oder mehrerer Monoazofarbstoffe entsprechend der allgemeinen Formel (2), eines oder zweier Kupferformazanfarbstoffe der Formel (3), eines oder mehrerer Disazofarbstoffe entsprechend der allgemeinen Formel (4) und gegebenenfalls einer oder zweier Monoazofarbstoffe entsprechend der allgemeinen Formel (5).

4. Farbstoffmischung nach einem der Ansprüche 1 bis 3, dadurch gekennzeichnet, daß R¹, R³, R⁵ und R⁷ unabhängig voneinander jedes Methoxy oder Wasserstoff ist und R², R⁴, R⁶ und R⁸ jedes Wasserstoff bedeuten.

5. Farbstoffmischung nach mindestens einem der Ansprüche 1 bis 4, dadurch gekennzeichnet, daß Y jedes unabhängig voneinander Vinyl oder β-Sulfatoethyl ist.

6. Farbstoffmischung nach mindestens einem der Ansprüche 1 bis 5, dadurch gekennzeichnet, daß die Farbstoffmischung zwei oder mehrere Farbstoffe entsprechend den allgemeinen Formel (1a) und (1b) enthält, bei welchen in Formel (1a) der Rest R²⁰ gleich Sulfo ist.

7. Farbstoffmischung nach Anspruch 6, dadurch gekennzeichnet, daß der oder die Farbstoffe der allgemeinen Formel (1a) mit R gleich Sulfo und der oder die Farbstoffe der allgemeinen Formel (1b) im Mischungsverhältnis von 75 : 25 bis 25 : 75 Gew.-% vorliegen.

8. Farbstoffmischung nach mindestens einem der Ansprüche 1 bis 7, dadurch gekennzeichnet, daß die Farbstoffmischung zwei oder mehrere Farbstoffe entsprechend den allgemeinen Formeln (3) und (4) enthält.

9. Farbstoffmischung nach Anspruch 8, dadurch gekennzeichnet, daß der oder die Farbstoffe der allgemeinen Formel (3) und der oder die Farbstoffe der allgemeinen Formel (4) im Mischungsverhältnis von 75 : 25 bis 25 : 75 Gew.-% vorliegen.

10. Farbstoffmischung nach Anspruch 8 oder 9, dadurch gekennzeichnet, daß die Farbstoffmischung einen oder zwei Farbstoffe entsprechend der allgemeinen Formel (5) enthält.

11. Verfahren zur Herstellung einer Farbstoffmischung gemäß Anspruch 1, 2 oder 3, dadurch gekennzeichnet, daß man die Einzelfarbstoffe oder Mischungen von zwei oder drei solcher Einzelfarbstoffe mit den anderen Einzelfarbstoffen oder Mischungen davon in Form von deren Farbstoffpulvern oder wäßrigen Lösungen miteinander vermischt.

12. Verwendung einer Farbstoffmischung von mindestens einem der Ansprüche 1 bis 10 oder von einem oder zwei der Farbstoffe der in Anspruch 1 angegebenen und definierten allgemeinen Formel (3) und einem oder mehreren Farbstoffen aus den Formeln (1a), (1b), (2) und (4) und gegebenenfalls (5) gemeinsam oder teilweise gemeinsam zum Färben von hydroxy- und/oder carbonamidgruppenhaltigem Fasermaterial.

13. Verfahren zum Färben von hydroxy- und/oder carbonamidgruppenhaltigem Fasermaterial, bei welchem Farbstoffe in gelöster Form auf das Material aufbringt und die Farbstoffe auf dem Material mittels Wärme und/oder mit Hilfe eines alkalisch wirkenden Mittels fixiert, dadurch gekennzeichnet, daß man als Farbstoffe eine Farbstoffmischung von mindestens einem der Ansprüche 1 bis 10 oder von einem oder zwei der Farbstoffe der in Anspruch 1 angegebenen und definierten allgemeinen Formel (3) und einen oder mehrere Farbstoffe aus den Formeln (1a), (1b), (2) und (4) und gegebenenfalls (5) gemeinsam oder teilweise gemeinsam einsetzt.

14. Verfahren nach Anspruch 13, dadurch gekennzeichnet, daß man eine Farbstoffmischung von mindestens einem der Ansprüche 1 bis 10 oder einen oder zwei der Farbstoffe der in Anspruch 1 angegebenen und definierten allgemeinen Formel (3) und einen oder mehrere Farbstoffe aus den Formeln (1a), (1b), (2) und (4) und gegebenenfalls (5) gemeinsam oder teilweise gemeinsam in einen Trichromiefärbeprozeß einsetzt.

## Claims

1. A dye mixture comprising one or two copper formazan dyes of the formula (3) given and defined below and one or more azo dyes which are selected from the group of one or more monoazo dyes of the formula (la) or (1b) or (la) and (1b) given and defined below, one or more monoazo dyes of the formula (2) given and defined below, one or more disazo dyes of the formula (4) given and defined below and, if desired, one or two monoazo dyes of the formula (5) given and defined below: 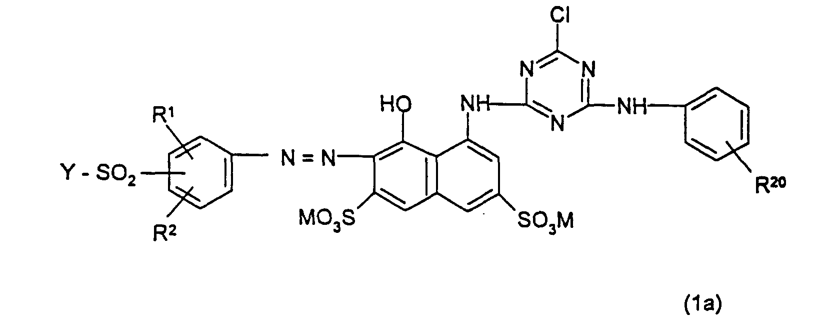 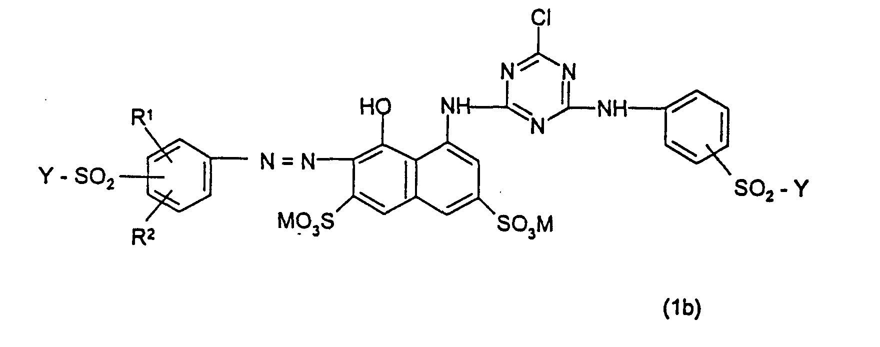 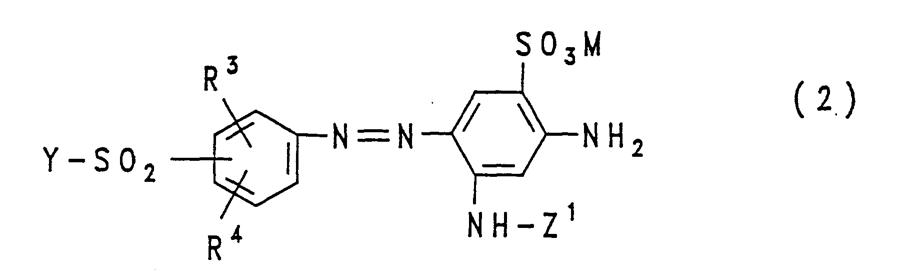 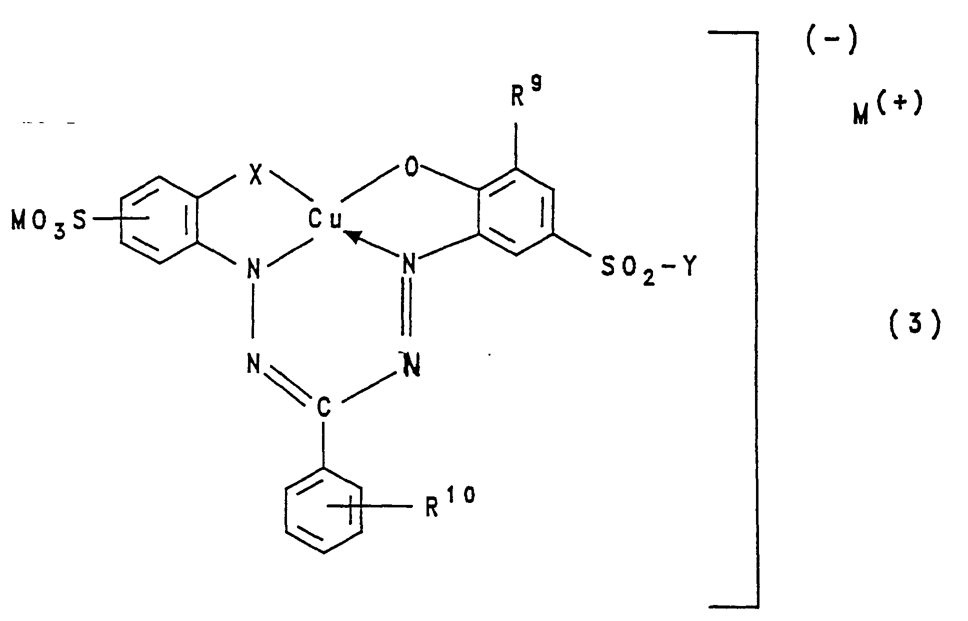 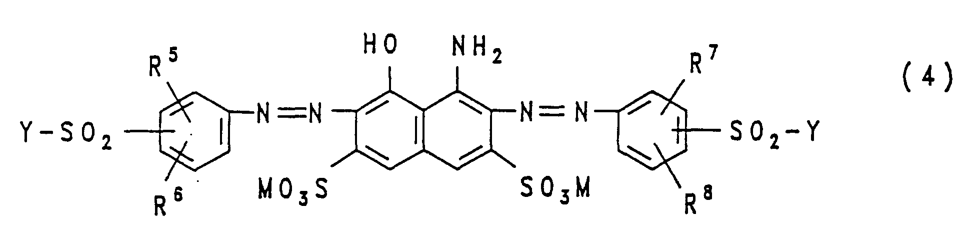 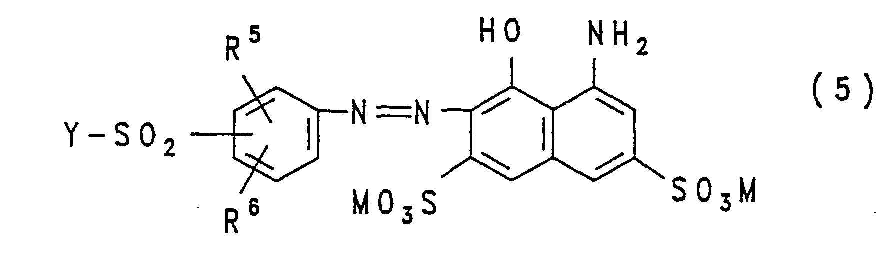 in which
M is hydrogen or an alkali metal,
R¹ is hydrogen, methyl, ethyl, methoxy or ethoxy,
R² is hydrogen, methyl, ethyl, methoxy or ethoxy,
R³ is hydrogen, methyl, ethyl, methoxy or ethoxy,
R⁴ is hydrogen, methyl, ethyl, methoxy or ethoxy,
R⁵ is hydrogen, methyl, ethyl, methoxy or ethoxy,
R⁶ is hydrogen, methyl, ethyl, methoxy or ethoxy,
R⁷ is hydrogen, methyl, ethyl, methoxy or ethoxy,
R⁸ is hydrogen, methyl, ethyl, methoxy or ethoxy,
R⁹ is hydrogen or sulfo,
R¹⁰ is hydrogen, alkyl of 1 to 4 carbon atoms, sulfo, carboxyl, alkanoyl of 2 to 5 carbon atoms or a group of the formula -SO₂-Y where Y has one of the meanings given below,
R²⁰ is hydrogen, methyl, sulfo or carboxyl,
X is carbonyloxy of the formula -CO-O- or oxy of the formula -O- or is the group -SO₃⁽⁻⁾,
each Y, independently of the others, is vinyl, β-chloroethyl, β-thiosulfatoethyl or β-sulfatoethyl,
Z¹ is alkanoyl of 2 to 5 carbon atoms, benzoyl, 2-cyanoamino-4-chloro-1,3,5-triazin-6-yl, 2-cyanoamino-4-fluoro-1,3,5-triazin-6-yl, 2,4-dichloro-1,3,5-triazin-6-yl or a group of the formula (a) 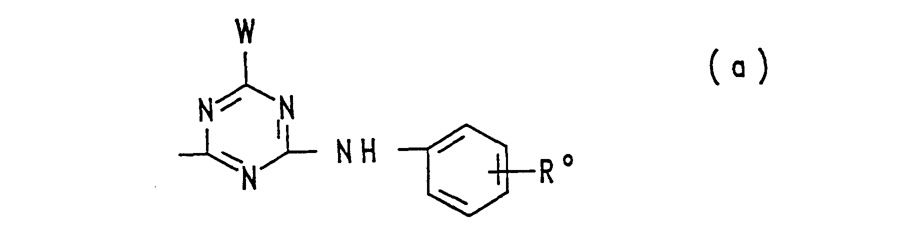 in which
W is chlorine, fluorine or cyanamino and
R⁰ is sulfo, carboxyl or a group of the formula -SO₂-Y where Y has one of the meanings given above.

2. A dye mixture as claimed in claim 1 comprising one or more monoazo dyes of the formula (1a) or (1b) or a mixture of the same and one or two copper formazan dyes of the formula (3) or comprising one or more monoazo dyes of the formula (1a) or (1b) or a mixture of the same, one or two copper formazan dyes of the formula (3), one or more disazo dyes of the formula (4) and, if desired, one or two monoazo dyes of the formula (5).

3. A dye mixture as claimed in claim 1 comprising one or more monoazo dyes of the formula (2) and one or two copper formazan dyes of the formula (3) or comprising one or more monoazo dyes of the formula (2), one or two copper formazan dyes of the formula (3), one or more disazo dyes of the formula (4) and, if desired, one or two monoazo dyes of the formula (5).

4. A dye mixture as claimed in one of claims 1 to 3, wherein R¹, R³, R⁵ and R⁷, independently of one another, are each methoxy or hydrogen and R², R⁴, R⁶ and R⁸ are each hydrogen.

5. A dye mixture as claimed in at least one of claims 1 to 4, wherein each Y, independently of the others, is vinyl or β-sulfatoethyl.

6. A dye mixture as claimed in at least one of claims 1 to 5, wherein the dye mixture contains two or more dyes of the formula (1a) and (1b) in which in formula (1a) the radical R²⁰ is sulfo.

7. A dye mixture as claimed in claim 6, wherein the dye(s) of the formula (1a) where R is sulfo and the dye(s) of the formula (1b) are present in a mixing ratio of 75 : 25 to 25 : 75% by weight.

8. A dye mixture as claimed in at least one of claims 1 to 7, wherein the dye mixture contains two or more dyes of the formulae (3) and (4).

9. A dye mixture as claimed in claim 8, wherein the dye(s) of the formula (3) and the dye(s) of the formula (4) are present in a mixing ratio of 75 : 25 to 25 : 75% by weight.

10. A dye mixture as claimed in claim 8 or 9, wherein the dye mixture contains one or two dyes of the formula (5).

11. A process for preparing a dye mixture as claimed in claim 1, 2 or 3, which comprises mixing the individual dyes or mixtures of two or three of such individual dyes with the other individual dyes or mixtures thereof in the form of their dye powders or aqueous solutions.

12. Use of a dye mixture as claimed in at least one of claims 1 to 10 or of one or two of the dyes of the formula (3) as claimed and defined in claim 1 and one or more dyes of the formulae (1a), (1b), (2) and (4) and, if desired, (5) together or some of them together for dyeing hydroxyl- and/or carboxamido-containing fiber material.

13. A process for dyeing hydroxyl- and/or carboxamido-containing fiber material, in which dyes are applied to the material in dissolved form and the dyes are fixed on the material by means of heat and/or by means of an alkaline agent, which process comprises using, as the dyes, a dye mixture as claimed in at least one of claims 1 to 10 or of one or two of the dyes of the formula (3) as claimed and defined in claim 1 and one or more dyes of the formulae (1a, (1b), (2) and (4) and, if desired, (5) together or some of them together.

14. The process as claimed in claim 13, which comprises using a dye mixture as claimed in at least one of claims 1 to 10 or one or two of the dyes of the formula (3) as claimed and defined in claim 1 and one or more dyes of the formulae (1a), (1b), (2) and (4) and, if desired, (5) together or some of them together in a trichromatic dyeing method.

## Revendications

1. Mélange de colorants, caractérisé en ce qu'il comprend un ou deux colorants formazane au cuivre de formule générale (3) mentionnée et définie ci-dessous et un ou plusieurs colorants azoïques, qui sont choisis parmi le groupe constitué d'un ou de plusieurs colorants monoazoïques de formules générales (la) ou (1b) ou (la) et (1b) mentionnées et définies ci-dessous, d'un ou de plusieurs colorants monoazoïques de formule générale (2) mentionnée et définie ci-dessous, d'un ou de plusieurs colorants disazoïques de formule générale (4) mentionnée et définie ci-dessous et éventuellement d'un ou de deux colorants monoazoïques de formule générale (5) mentionnée et définie ci-dessous : 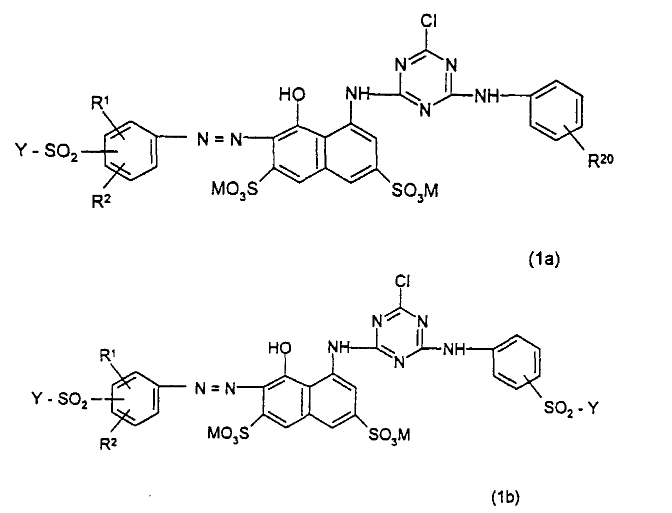 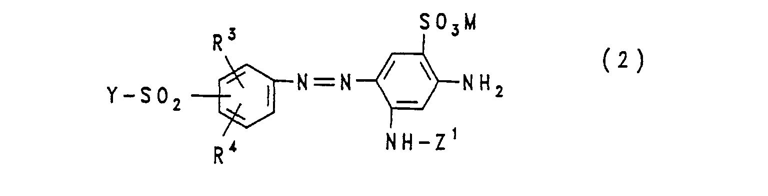 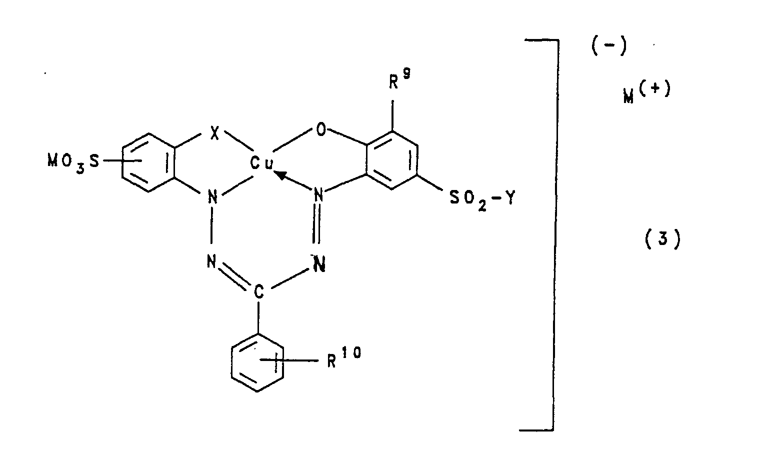 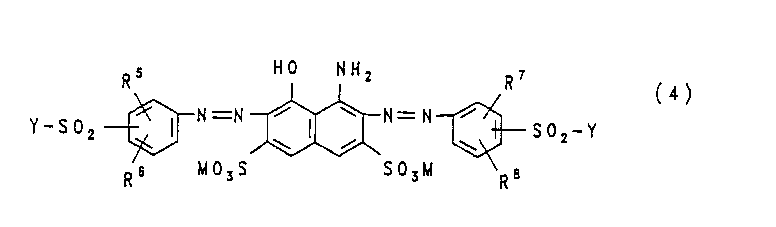 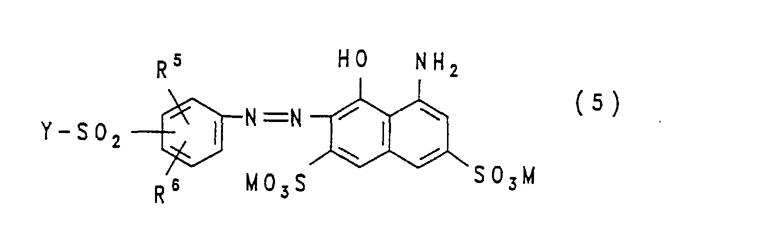 dans lesquelles :
M est un hydrogène ou un métal alcalin ;
R¹ est un hydrogène, un méthyle, un éthyle, un méthoxy ou un éthoxy ;
R² est un hydrogène, un méthyle, un éthyle, un méthoxy ou un éthoxy ;
R³ est un hydrogène, un méthyle, un éthyle, un méthoxy ou un éthoxy ;
R⁴ est un hydrogène, un méthyle, un éthyle, un méthoxy ou un éthoxy ;
R⁵ est un hydrogène, un méthyle, un éthyle, un méthoxy ou un éthoxy ;
R⁶ est un hydrogène, un méthyle, un éthyle, un méthoxy ou un éthoxy ;
R⁷ est un hydrogène, un méthyle, un éthyle, un méthoxy ou un éthoxy ;
R⁸ est un hydrogène, un méthyle, un éthyle, un méthoxy ou un éthoxy ;
R⁹ est un hydrogène ou un sulfo ;
R¹⁰ est un hydrogène, un alkyle ayant de 1 à 4 atomes de carbone, un sulfo, un carboxy, un alcalnoyle ayant de 2 à 5 atomes de carbone ou un groupe de formule SO₂-Y, dans laquelle Y a l'une des significations mentionnées ci-dessous ;
R²⁰ est un hydrogène, un méthyle, un sulfo ou un carboxy ;
X est un carbonyloxy de formule -CO-O- ou un oxy de formule -O- ou le groupe -SO₃⁽⁻⁾ ;
Y est indépendamment, dans chaque cas, un vinyle, un β-chloroéthyle, un β-thiosulfatoéthyle ou un β-sulfatoéthyle ;
Z¹ est un alcanoyle ayant de 2 à 5 atomes de carbone, un benzoyle, un 2-cyanoamino-4-chloro-1,3,5-triazin-6-yle, un 2-cyanoamino-4-fluoro-1,3,5-triazin-6-yle, un 2,4-dichloro-1,3,5-triazin-6-yle ou un groupe de formule générale (a) 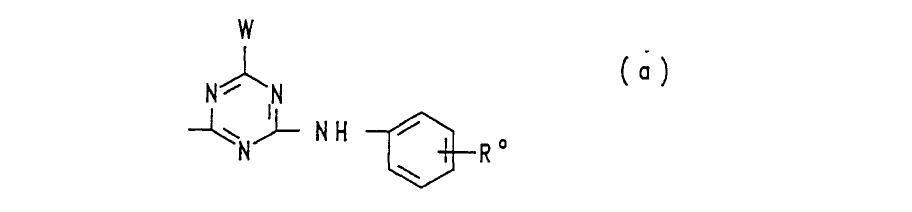 dans laquelle
W est un chlore, un fluor ou un cyanoamino et
R^{o} est un sulfo, un carboxy ou un groupe de formule générale -SO₂-Y dans lequel Y a l'une des significations susmentionnées.

2. Mélange de colorants selon la revendication 1, caractérisé en ce qu'il comprend un ou plusieurs colorants monoazoïques de formules générales (1a) ou (1b) ou un mélange de ceux-ci, et un ou deux colorants formazane au cuivre de formule générale (3), ou en ce qu'il comprend un ou plusieurs colorants monoazoïques de formules générales (1a) ou (1b) ou un mélange de ceux-ci, un ou deux colorants formazane au cuivre de formule générale (3), un ou plusieurs colorants disazoïques de formule générale (4) et éventuellement un ou deux colorants monoazoïques de formule générale (5).

3. Mélange de colorants selon la revendication 1, caractérisé en ce qu'il comprend un ou plusieurs colorants monoazoïques de formule générale (2) et un ou deux colorants formazane au cuivre de formule générale (3), ou en ce qu'il comprend un ou plusieurs colorants monoazoïques de formule générale (2), un ou deux colorants formazane au cuivre de formule (3), un ou plusieurs colorants disazoïques de formule générale (4) et éventuellement un ou deux colorants monoazoïques de formule générale (5).

4. Mélange de colorants selon l'une quelconque des revendications 1 à 3, caractérisé en ce que R¹, R³, R⁵ et R⁷ représentent chacun, indépendamment les uns des autres, un méthoxy ou un hydrogène et R², R⁴, R⁶ et R⁸ représentent chacun un hydrogène.

5. Mélange de colorants selon au moins l'une des revendications 1 à 4, caractérisé en ce que Y est indépendamment, dans chaque cas, un vinyle ou un β-sulfatoéthyle.

6. Mélange de colorants selon au moins l'une des revendications 1 à 5, caractérisé en ce que le mélange de colorants comprend deux colorants ou plus de formules générales (1a) et (1b), dans lesquelles dans la formule (1a), le radical R²⁰ est un sulfo.

7. Mélange de colorants selon la revendication 6, caractérisé en ce que le ou les colorants de formule générale (1a) dans laquelle R est un sulfo et le ou les colorants de formule générale (1b) sont présents en un rapport de mélange de 75:25 à 25:75% en poids.

8. Mélange de colorants selon au moins l'une des revendications 1 à 7, caractérisé en ce que le mélange de colorants comprend deux colorants ou plus de formules générales (3) et (4).

9. Mélange de colorants selon la revendication 8, caractérisé en ce que le ou les colorants de formule générale (3) et le ou les colorants de formule générale (4) sont présents en un rapport de mélange de 75:25 à 25:75% en poids.

10. Mélange de colorants selon la revendication 8 ou 9, caractérisé en ce que le mélange de colorants comprend un ou deux colorants de formule générale (5).

11. Procédé de préparation d'un mélange de colorants selon la revendication 1, 2 ou 3, caractérisé en ce que l'on mélange les colorants individuels ou mélanges de deux ou trois colorants individuels de ce type avec les autres colorants individuels ou leurs mélanges, sous forme de leurs poudres colorantes ou de leurs solutions aqueuses.

12. Utilisation d'un mélange de colorants selon au moins l'une des revendications 1 à 10 ou d'un ou de deux des colorants de formule générale (3) indiquée et définie à la revendication 1 et d'un ou de plusieurs colorants de formules (1a), (1b), (2) et (4) et éventuellement (5) conjointement ou partiellement conjointement pour la teinture d'une matière fibreuse renfermant des groupes hydroxy et/ou carboxamide.

13. Procédé de teinture d'une matière fibreuse renfermant des groupes hydroxy et/ou carboxamide dans lequel on applique des colorants sous forme dissoute sur la matière et on fixe les colorants sur la matière par la chaleur et/ou à l'aide d'un agent alcalin, caractérisé en ce que l'on utilise, en tant que colorants, un mélange de colorants selon au moins l'une des revendications 1 à 10 ou d'un ou de deux des colorants de formule générale (3) indiquée et définie à la revendication 1, et un ou plusieurs colorants de formules (1a), (1b), (2) et (4) et éventuellement (5), conjointement ou partiellement conjointement.

14. Procédé selon la revendication 13, caractérisé en ce que l'on utilise un mélange de colorants selon au moins l'une des revendications 1 à 10 ou un ou deux des colorants de formule générale (3) indiquée et définie à la revendication 1, et un ou plusieurs colorants de formules (1a), (1b), (2) et (4) et éventuellement (5), conjointement ou partiellement conjointement dans un processus de teinture trichromatique.
